# EUROPEAN PATENT SPECIFICATION

(11) **EP 2 464 063 B1**
(45) Date of publication and mention of the grant of the patent: **04.06.2014**
(21) Application number: 10811284.8
(22) Date of filing: 26.08.2010
(51) Int. Cl.: H04L 29/06, H04W 28/06, H04W 88/04, H04B 7/155, H04L 12/54, H04W 84/04

(54) **METHOD AND APPARATUS FOR HEADER COMPRESSION IN NETWORK RELAY SCENARIOS**
VERFAHREN UND VORRICHTUNG ZUR HEADER-KOMPRESSION IN NETZWERKRELAIS-SZENARIOS
PROCÉDÉ ET APPAREIL POUR COMPRESSION D'EN-TÊTE DANS DES SCÉNARIOS DE RELAIS DE RÉSEAU

(30) Priority: 26.08.2009 CN 200910189676
(43) Date of publication of application: 13.06.2012
(73) Proprietor: Huawei Technologies Co., Ltd., Guangdong 518129 (CN)
(72) Inventor: ZHU, Lei, Shenzhen Guangdong 518129 (CN)
(74) Representative: Körber, Martin Hans
(86) International application number: PCT/CN2010/076396
(87) International publication number: WO 2011/023124

(56) References cited:
- WO-A2-2009/099845
- CN-A- 1 377 549
- CN-A- 101 350 812
- CN-A- 101 350 812
- CN-A- 101 369 977
- CN-A- 101 369 977
- US-A1- 2004 001 508
- "Overhead consideration on relay", 3GPP DRAFT; R2-093904 OVERHEAD CONSIDERATION ON RELAY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050352099, [retrieved on 2009-06-23]
- RAN3 LTE-A RAPPORTEUR: "LTE-A RAN3 Baseline Document", 3GPP DRAFT; R3-091447, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090509, 9 May 2009 (2009-05-09), XP050341769, [retrieved on 2009-05-09]

## Description

### FIELD OF THE INVENTION

The present invention relates to the mobile communication field, and in particular, to a method and an apparatus for header compression in a network relay scenario.

### BACKGROUND OF THE INVENTION

The Relay (relay) technology is used to increase the distribution density of stations and antennas by adding some new Relay stations (or relay node, RN) on the basis of the original stations. These newly-added relay nodes and the original eNodeB (donor eNodeB) are all connected in a wireless manner, and have no wired connection with the transmission network. Downlink data firstly arrives at the donor eNodeB, then is transmitted to a relay node, and the relay node transmits the downlink data to a terminal user, and the case of uplink data is conversely. By using this method, the distance between an antenna and the end user is shortened, and the link quality of a terminal may be improved, thereby increasing the spectrum efficiency and the user data rate of a system.

IPv6 adopts an address space of 128 bits, and obtains a mobile IPv6 mechanism through some extension headers, thereby implementing that an IP (Internet Protocol, Internet Protocol)-based device can seamlessly move among different radio cells. However, on the other hand, a large address space and extension headers increase the transmission overhead. Especially in case of a radio link, transmitting lengthy headers wastes much radio link bandwidth that has already been in shortage. Therefore, how to efficiently transmit IPv6 packets has become a key problem that has to be solved in mobile IP. One solution is to use a header compression technology. The header compression technology is hereinafter called header compression for short.

At present, no technology can solve how to perform header compression in a network relay scenarios.

"3GPP Draft; R2-093904, Overhead consideration on relay, 20090623 3rd Generation Partnership Project (3GPP), Mobile Competence Centre; 650, route des Lucioles; F-06921 Sophia-Antipolis Cedex; France" describes the intent to reduce header overhead. The document proposes to discuss how to realize the head compression protocol capable of compressing GTP-U-header (and plus adjacent IP/UDP/RTP headers).

"3GPP Draft; R3-091447, LTE-A RAN3 Baseline Document, 20090509 3rd Generation Partnership Project (3GPP), Mobile Competence Centre ; 650, route des Lucioles ; F-06921 Sophia-Antipolis Cedex ; France" discloses a standard on LTE-A Relaying functionality.

US 2004/001508 A1 discloses a packed based data transmission scheme in a network system through a tunnel between a receiving node and a sending node.

CN 101 350 812 A discloses a data transmission method, wherein the data is packed into a plurality of GTP-U data packets, and IP head, an UDP head and a GTP-U head are compressed in some GTP-U data packets in the GTP-U data packets to form the compressed GTP-U data packet, and the compressed and uncompressed GTP-U data packets are sent to a receiving device.

CN 101 369 977 A discloses to receive transmitted data packets, resolve the received data packets to obtain a protocol header and user data, and compressing the protocol header, and then packaging user data and protocol header for transmission.

### SUMMARY OF THE INVENTION

Embodiments of the present invention provide a method and an apparatus for header compression in a network relay scenario, so that header compression can be performed in a network relay scenario.

An embodiment of the present invention provides a method for header compression in a network relay scenario, which includes:
receiving, by a relay node, a first header-compressed data packet sent by user equipment or another relay node;
encapsulating a transport protocol header for the first header-compressed data packet, and performing header compression for the transport protocol header to form a second data packet; and
sending the second data packet to an eNodeB or a next relay node in an uplink direction,
wherein the encapsulating the transport protocol header for the first header-compressed data packet, and performing header compression for the transport protocol header, to form the second data packet include: decompressing a header of the first header-compressed data packet to obtain an IP/UDP/APP. header; encapsulating the decompressed first data packet with an IP/UDP/ GTP-U header; and compressing the IP/UDP/APP. header by using an IP/UDP/APP. compression profile and compressing the IP/UDP/GTP-U header by using an IP/UDP/GTP-U compression profile to form the second data packet having two segments of compressed headers; or compressing the IP/UDP/APP. header and the IP/UDP/GTP-U header to form the second data packet having one segment of compressed headers.

In one aspect, the transport protocol used for encapsulating the transport protocol header includes: a tunneling protocol and a transport protocol for the tunneling protocol, wherein the tunneling protocol includes: GTP-U.

In another aspect, the method further includes receiving, by the relay node, a first ROHC parameter sent by the user equipment and used for the first data packet; and sending, by the relay node, a first PDCP parameter supported by the relay node to the user equipment, wherein the first PDCP parameter includes the first ROHC parameter; wherein the decompressing the header of the first header-compressed data packet includes: decompressing, by the relay node, the header of the first header-compressed data packet according to the first ROHC parameter; after the decompressing the header of the first header-compressed data packet, the method further includes: sending, by the relay node, a second ROHC parameter for the second data packet to the eNodeB, so that the eNodeB decompresses the header of the second data packet according to the second ROHC parameter, wherein the second ROHC parameter comprises a profile used by the relay node for compressing the header of the second data packet; and receiving, by the relay node, a second PDCP parameter sent by the eNodeB and supported by the eNodeB, wherein the second PDCP parameter comprises the second ROHC parameter.

In another aspect, if the second data packet having two segments of compressed headers is formed, the second ROHC parameter includes an IP/UDP/APP. compression profile and an IP/UDP/GTP-U compression profile; or if the second data packet having one segment of compressed headers is formed, the ROHC parameter includes: a compression profile corresponding to the IP/UDP/APP. header and the IP/UDP/GTP-U header.

Another embodiment of the present invention provides a method for header compression in a network relay scenario, which includes:
receiving, by a relay node, a first header-compressed data packet sent by user equipment or another relay node;
encapsulating a transport protocol header for the first header-compressed data packet, and performing header compression for the transport protocol header to form a second data packet; and
sending the second data packet to an eNodeB or a next relay node in an uplink direction.
wherein the receiving, by the relay node, the first header-compressed data packet sent by the user equipment includes receiving, by the relay node, the first header-compressed data packet, which is sent by the user equipment and encapsulated with an IP/UDP/APP. header that has undergone header compression; and the encapsulating the transport protocol header for the first header-compressed data packet, and performing header compression for the transport protocol header include: encapsulating an IP/UDP/GTP-U header outside the IP/UDP/APP. header of the first header-compressed data packet, and performing header compression for the IP/UDP/GTP-U header.

In one aspect, the method further includes receiving, by the relay node, a third ROHC parameter sent by the user equipment and used for the first header-compressed data packet; forwarding, by the relay node, the third ROHC parameter to the eNodeB; sending, by the relay node, a fourth ROHC parameter for the second data packet to the eNodeB, so that the eNodeB decompresses the header of the second data packet according to the third ROHC parameter and the fourth ROHC parameter, wherein the fourth ROHC parameter comprises a profile used by the relay node for compressing the header of the second data packet; receiving, by the relay node, a PDCP parameter sent by the eNodeB and supported by the eNodeB, wherein the PDCP parameter comprises the third ROHC parameter and the fourth ROHC parameter; and forwarding, by the relay node, the PDCP parameter supported by the eNodeB to the user equipment.

In another aspect, the method further includes receiving, by the relay node, a fifth ROHC parameter sent by the user equipment and used for the first data packet; sending, by the relay node, a third PDCP parameter supported by the relay node to the user equipment, wherein the third PDCP parameter comprises the fifth ROHC parameter; forwarding, by the relay node, the fifth ROHC parameter to the eNodeB; sending, by the relay node, a sixth ROHC parameter for the second data packet to the eNodeB, so that the eNodeB decompresses the header of the second data packet according to the fifth ROHC parameter and the sixth ROHC parameter, wherein the sixth ROHC parameter comprises a profile used by the relay node for compressing the header of the second data packet; and receiving, by the relay node, a fourth PDCP parameter sent by the eNodeB and supported by the eNodeB, wherein the fourth PDCP parameter comprises the fifth ROHC parameter and the sixth ROHC parameter.

In another aspect, the fifth ROHC parameter includes: an IP/UDP/APP. compression profile; and the sixth ROHC parameter comprises: an IP/UDP/GTP-U compression profile.

Another embodiment of the present invention provides a method for header compression in a network relay scenario, which includes:
receiving, by a relay node, a first header-compressed data packet sent by user equipment or another relay node;
encapsulating a transport protocol header for the first header-compressed data packet, and performing header compression for the transport protocol header to form a second data packet; and
sending the second data packet to an eNodeB or a next relay node in an uplink direction,
wherein the receiving, by the relay node, the first header-compressed data packet sent by another relay node includes: receiving, by the relay node, the first header-compressed data packet, which is sent by another relay node and encapsulated with an IP/UDP/APP. header and an IP/UDP/GTP-U header that have undergone header compression; the encapsulating the transport protocol header for the first header-compressed data packet, and performing header compression for the transport protocol header to form the second data packet include: decompressing the IP/UDP/APP. header and the IP/UDP/GTP-U header of the first header-compressed data packet; compressing the IP/UDP/APP. header by using an IP/UDP/APP. compression profile, and compressing the IP/UDP/GTP-U header by using an IP/UDP/GTP-U compression profile to form the second data packet having two segments of compressed headers, or compressing the IP/UDP/APP. header and the IP/UDP/GTP-U header to form the second data packet having one segment of compressed headers; or, decompressing the IP/UDP/GTP-U header of the first header-compressed data packet; and compressing the IP/UDP/GTP-U header by using the IP/UDP/GTP-U compression profile to form the second data packet having two segments of compressed headers, wherein the two segments of compressed headers comprise: the IP/UDP/APP. header and the IP/UDP/GTP-U header.

In one aspect, the receiving, by the relay node, the first header-compressed data packet sent by the user equipment includes: receiving multiple first header-compressed data packets sent by multiple user equipment; the encapsulating the transport protocol header for the first header-compressed data packet, and performing header compression for the transport protocol header to form the second data packet include: encapsulating a same transport protocol header for the headers of the multiple first header-compressed data packets, and performing header compression for the transport protocol header to form a second data packet.

In another aspect, the second data packet is encapsulated with IP addresses and/or port numbers, wherein the IP addresses and/or port numbers are corresponding respectively to the multiple user equipment and for distinguishing data packets that are sent by the multiple user equipment and encapsulated with the same transport protocol header.

Another embodiment of the present invention provides a relay node, which includes:
a receiving unit, configured to receive a first header-compressed data packet sent by user equipment or another relay node;
an encapsulating and compressing unit, configured to encapsulate a transport protocol header for the first header-compressed data packet, and perform header compression for the transport protocol header to form a second data packet; and
a sending unit, configured to send the second data packet to an eNodeB or a next relay node in an uplink direction,
wherein the encapsulating and compressing unit is configured to: decompress a header of the first data packet to obtain an Internet Protocol/User Datagram Protocol/Application Protocol, IP/UDP/APP., header, encapsulate the decompressed header of the first header-compressed data packet with an Internet Protocol/ User Datagram Protocol/General Packet Radio Service Tunneling Protocol - User Plane, IP/UDP/GTP-U, header; and compress the IP/UDP/APP. header by using an IP/UDP/APP. compression profile and compress the IP/UDP/GTP-U header by using an IP/UDP/GTP-U compression profile to form the second data packet having two segments of compressed headers; or compress the IP/UDP/APP. header and the IP/UDP/GTP-U header to form the second data packet having one segment of compressed headers.

Another embodiment of the present invention provides a relay node, which includes:
a receiving unit, configured to receive a first header-compressed data packet sent by user equipment or another relay node;
an encapsulating and compressing unit, configured to encapsulate a transport protocol header for the first header-compressed data packet, and perform header compression for the transport protocol header to form a second data packet; and
a sending unit, configured to send the second data packet to an eNodeB or a next relay node in an uplink direction,
wherein the encapsulating and compressing unit is configured to: encapsulate an IP/UDP/GTP-U header outside an IP/UDP/APP. header of the first header-compressed data packet to form the second data packet, and performing header compression for the IP/UDP/GTP-U header.Compared with the prior art, one of the foregoing technical solutions has following advantages or beneficial effects:

In the embodiments of the present invention, the relay node receives the first header-compressed data packet sent by the user equipment or another relay node; encapsulates the transport protocol header for the first data packet, and performs header compression for the header to form the second data packet; and sends the second data packet to the eNodeB or a next relay node in the uplink direction. Thereby, the header compression function is implemented; the occupation of air interface bandwidth is reduced; and the spectrum utilization is improved.

### BRIEF DESCRIPTION OF THE DRAWINGS

FIG. 1 is a flow chart of a method for header compression in a network relay scenario according to an embodiment of the present invention;
FIG. 2 is an architecture diagram of a user plane protocol stack of a relay node and a Donor eNodeB in a typical Relay scenario;
FIG. 3a is a schematic diagram of a method for header compression in a network relay scenario according to an embodiment of the present invention;
FIG 3b is a frame structure of an IP header compressed between a UE and a relay node in the embodiment corresponding to FIG 3a;
FIG 3c is a frame structure of an IP header compressed between a relay node and an eNodeB in the embodiment corresponding to FIG 3a;
FIG 3d is a schematic diagram of a configuration process of compression parameters necessary in the embodiment corresponding to FIG 3a;
FIG 4a is a schematic diagram of another method for header compression in a network relay scenario according to an embodiment of the present invention;
FIG 4b is a frame structure of an IP header compressed between a UE and a relay node in the embodiment corresponding to FIG 4a;
FIG 4c is a frame structure of an IP header compressed between a relay node and an eNodeB in the embodiment corresponding to FIG 4a;
FIG 4d is a schematic diagram of a configuration process of compression parameters necessary in the embodiment corresponding to FIG 4a;
FIG 4e is a schematic diagram of another configuration process of compression parameters necessary in the embodiment corresponding to FIG 4a;
FIG 5a is a schematic diagram of still another method for header compression in a network relay scenario according to an embodiment of the present invention;
FIG 5b is a frame structure of an IP header compressed between a UE and a relay node in the embodiment corresponding to FIG 5a;
FIG 5c is a frame structure of an IP header compressed between a relay node and an eNodeB in the embodiment corresponding to FIG 5a;
FIG 5d is a schematic diagram of a configuration process of compression parameters necessary in the embodiment corresponding to FIG 5a;
FIG 6a is a schematic diagram of still another method for header compression in a network relay scenario according to an embodiment of the present invention;
FIG 6b is a frame structure of an IP header compressed between a UE and a relay node in the embodiment corresponding to FIG 6a;
FIG. 6c is a frame structure of an IP header compressed between a relay node and an eNodeB in the embodiment corresponding to FIG. 6a;
FIG. 7a is a schematic diagram of still another method for header compression in a network relay scenario according to an embodiment of the present invention;
FIG. 7b is a frame structure of an IP header compressed between a UE and relay node 1 in the embodiment corresponding to FIG. 7a;
FIG. 7c is a frame structure of an IP header compressed between relay node 1 and relay node 2 in the embodiment corresponding to FIG 7a;
FIG. 7d is a frame structure of an IP header compressed between relay node 2 and an eNodeB in the embodiment corresponding to FIG 7a;
FIG. 8 is a schematic diagram of still another method for header compression in a network relay scenario according to an embodiment of the present invention;
FIG. 9a is a schematic diagram of a frame structure of a UDP packet;
FIG. 9b is a schematic diagram of a frame structure of IPv4;
FIG. 9c is a schematic diagram of a frame structure of IPv6; and
FIG. 10 is a schematic structure diagram of a relay node according to an embodiment of the present invention.

### DETAILED DESCRIPTION OF THE EMBODIMENTS

To make the objectives, the technical solutions, and the advantages of the embodiments of the present invention clearer, the embodiments of the present invention are described in detail below with reference to the accompanying drawings.

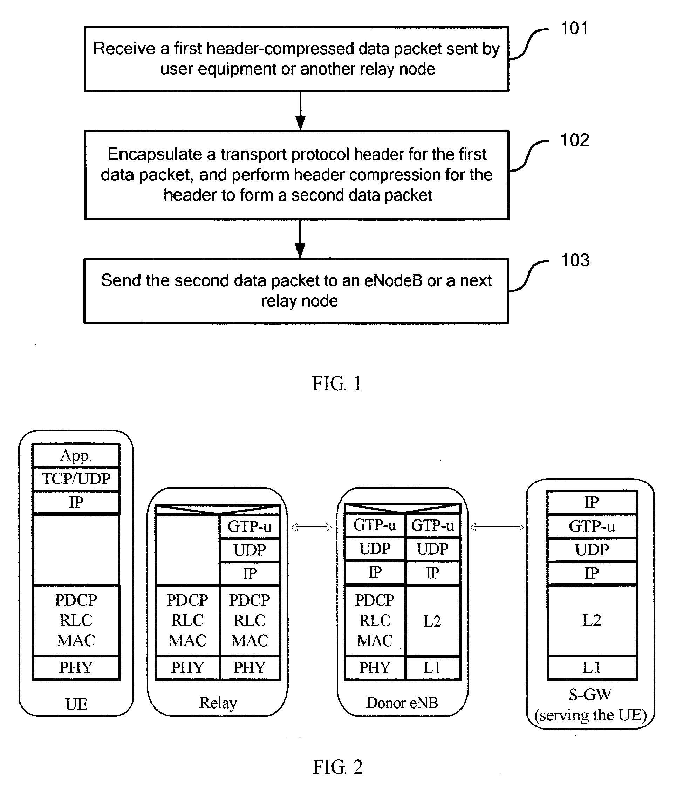

FIG. 1 is a flow chart of a method for header compression in a network relay scenario according to an embodiment of the present invention, which includes the following:
101. Receive a first header-compressed data packet sent by user equipment or another relay node.
102. Encapsulate a transport protocol header for the first data packet, and perform header compression for the header to form a second data packet.

The transport protocol specifically includes: a tunneling protocol and a transport protocol for the tunneling protocol. The tunneling protocol includes: GTP-U (general packet radio service tunneling protocol - user plane). An IP/UDP (user datagram protocol) protocol header is encapsulated in the GTP-U tunneling protocol. The IP protocol and the UDP protocol are used for bearing the tunneling protocol.

Specifically, step 102 may be performed as follows:
after decompressing the header of the first data packet, compressing the decompressed header of the first data packet by using an IP/UDP/APP. compression profile and an IP/UDP/GTP-U compression profile respectively to respectively form the second data packet having two segments of compressed headers; or compressing the IP/UDP/APP. header and the IP/UDP/GTP-U header into one segment of compressed headers to form the second data packet.

Alternatively, step 102 may be: encapsulating the IP/UDP/GTP-U header outside the IP/UDP/APP. header of the first header-compressed data packet, to form the second data packet.

103. Send the second data packet to an eNodeB or a next relay node.

Through the method provided in this embodiment, under the circumstance where there is a relay node between the UE and the network and the interface between the relay node and the network is still a radio interface, the relay node performs header compression for the data packet between the relay node and the UE, and performs header compression for the data packet between the relay node and the eNodeB entity respectively. Thereby, the problem that the data packets occupy too much bandwidth in a network relay scenario is solved; and by applying header compression on the relay node, the eNB, and the UE, the occupation of air interface bandwidth is reduced, and the spectrum utilization is improved.

The method provided in this embodiment of the present invention is described below with reference to a specific Relay scenario. It should be particularly noted that, this embodiment of the present invention may also be applied in other Relay scenarios.

FIG 2 shows an architecture of a user plane protocol stack of a relay node and a Donor eNodeB in a typical Relay scenario, which involves: App. (application protocol), TCP (transfer control protocol), UDP, PDCP (packet data convergence protocol), RLC (radio link control protocol), MAC (media access control), PHY (physical layer), GTP-U, and so on, where App. specifically includes: RTP (realtime transport protocol), HTTP (hypertext transfer protocol) or FTP (file transfer protocol), and so on. In the present invention, IP/UDP/APP. represents a combination form of an application protocol and transport protocol of the application protocol. In the present invention, there are also combinations of other application protocols and IP, TCP, and UDP, and, such combinations are also applicable to the present invention.

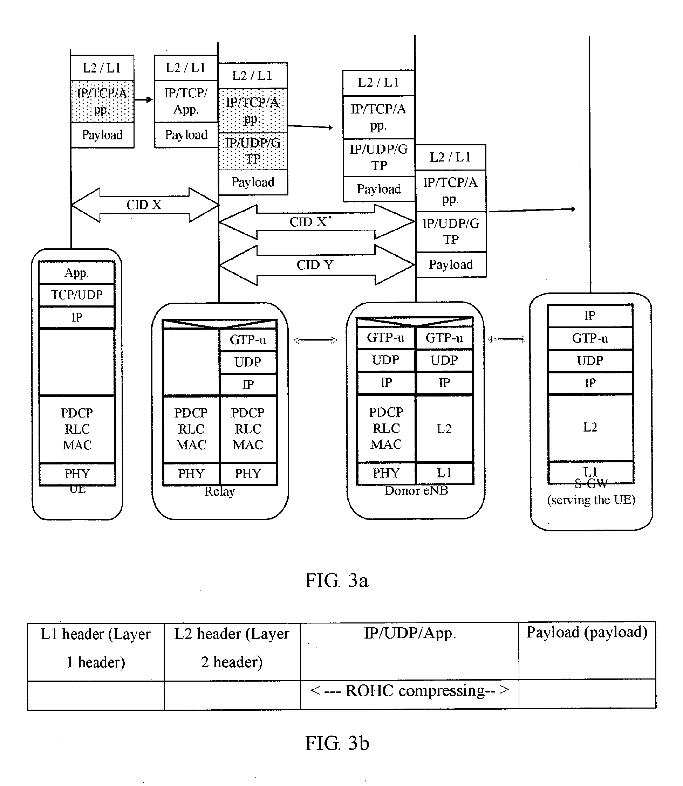

FIG. 3a is a schematic diagram of a method for header compression in a network relay scenario according to an embodiment of the present invention. In order to clearly distinguish a compressed part from a decompressed part, the dotted shade is used in the drawing to represent a compressed part. CID represents a context identifier. Because multiple contexts may be maintained in one bearer, it is necessary to use context identifiers to distinguish different header compression processes with respect to one media stream. In the ROHC protocol, the CID is a binary number of 0 to 15 digits. In this embodiment of the present invention, CID X represents that a header compression context for the IP/UDP/APP. header, which is identified by a Context Identifier X, is established between the UE and the relay node; CID X' represents that a header compression context for the IP/UDP/APP. header, which is identified by a Context Identifier X', is established between the relay node and the eNodeB; and CID Y represents that a header compression context for the IP/UDP/GTP-U header, which is identified by a Context Identifier Y, is established between the relay node and the eNodeB. CID X, CID X' and CID Y represent different context identifiers respectively.

In this embodiment, the media sent by the UE (user equipment) is compressed on the user plane by using a header compression profile and is decompressed on the relay node. On the relay node, the user plane data sent to the donor eNodeB entity is compressed by using an IP/UDP/APP compression profile and an IP/UDP/GTP-U compression profile respectively; and the eNodeB entity decompresses the IP header, and sends the decompressed data packet to a next network entity, such as a serving gateway, or a public data network gateway. IP/UDP/APP represents the protocol stack that is being used by the UE from the IP protocol to the application layer protocol for the service, such as IP/UDP/RTP; a protocol stack is a fixed combination of some protocols, such as IP/TCP/HTTP, IP/TCP, IP, and UDP. The meaning of this expression in other embodiments of the present invention is the same as above and thus is not repeated here again. The Donor eNodeB is a primary eNodeB that provides signals for Relay nodes and is hereinafter called an eNodeB for short.

In this embodiment, a context for a compression profile for compressing the IP/UDP/APP. header is established between the UE and the relay node, and a context for a compression profile for the IP/UDP/GTP-U header is established between the relay node and the eNodeB.

A frame structure of a compressed IP header for which a context for ROHC compressing is established between the UE and the relay node is as shown in FIG. 3b.

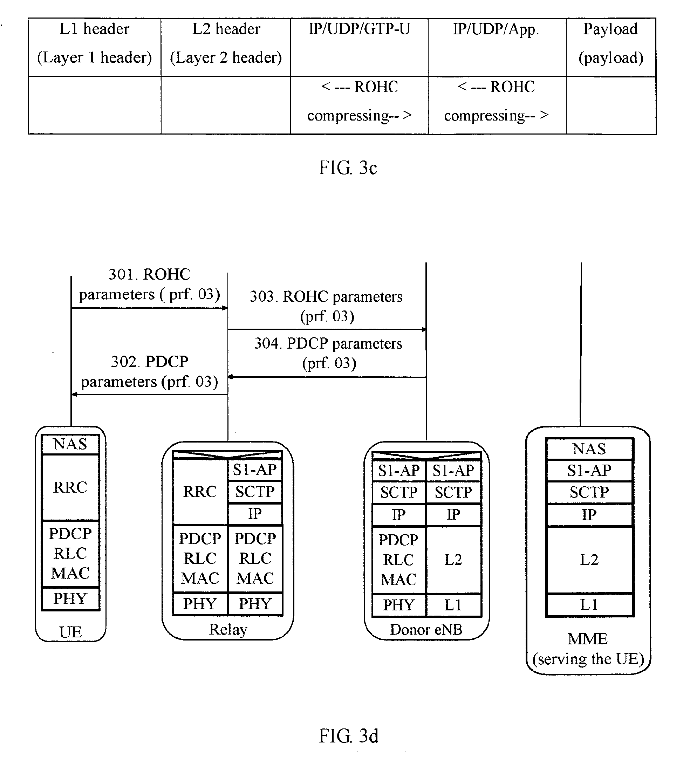

A frame structure of a compressed IP header for which a context for two nested layers of ROHC compression is established between the relay node and the eNodeB is as shown in FIG. 3c.

FIG 3d shows a configuration process of compression parameters necessary during the compression in this embodiment, which is also called a negotiation process, involving RRC (radio resource control protocol), S1-AP (S1 interface), SCTP (stream control transport protocol), and NAS (non-access stratum). At this time, the relay node acts as a terminal, and the S1-AP interface may also be used to negotiate the header compression parameters. Specifically, the configuration process specifically includes the following:
301. The UE sends a DRB (dedicated radio bearer) establishment/configuration message, which includes ROHC parameters. The ROHC parameters sent at this time include a compression mechanism, such as ROHC compression, and a profile of the compressed header, such as IP/UDP/APP. At this time, the profile of ROHC compression supported by the UE is a separate IP/UDP/App. compression profile, an IP/TCP compression profile, an IP/UDP compression profile, and so on. The PDCP parameter represents the UE's capability to support header compression. The profile of the compressed header is a compression profile of the compression mechanism with respect to a certain type of header combination. In FIG. 3d, prf.03 (profile 03) represents an identifier of a fixed compression profile for performing the header compression, for example, if the ROHC parameters sent by the UE include Profile 0x0001, which represents that the UE requests ROHC compression supporting Profile 0x0001 on the established DRB.
302. After receiving the ROHC parameters sent by the UE, such as the ROHC compression, and the profile of the compressed header, the relay node may send a reconfiguration message to the UE, where the network reconfiguration message includes PDCP parameters, and the PDCP parameters include ROHC compression parameters that are reconfigured for the DRB and supported by the DRB and the profile of the compressed header. The frame structure of the compressed IP header is as shown in FIG. 3b.

It should be noted that, step 302 may follow step 301 or may be performed after the relay node completes step 303 in the procedure.

This procedure may establish a context for the ROHC compression between the UE and the relay node.

303. In order for the relay node to perform the header compression mechanism between the relay node and the air interface of the eNodeB entity, the user plane data sent between the relay node and the eNodeB further includes the IP/UDP/GTP-U header in addition to a payload, an L1 header (layer 1 header) and an L2 header (layer 2 header), and the IP/UDP/APP. header as shown in the drawing. In this embodiment, in addition to the IP/UDP/APP. header received by the relay node, the IP/UDP/GTP-U header also needs to be compressed.

The relay node sends the eNodeB the supported ROHC parameters. The ROUC parameters sent at this time includes a compression mechanism, such as ROHC compression, and the profile of the compressed header, where the compression profile here respectively includes an identifier of the IP/UDP/GTP-U compression profile and a support of the IP/UDP/APP. compression profile, which indicates that the relay node supports and requests the application of the IP/UDP/GTP-U compression and the IP/UDP/APP. compression respectively in the requested DRB.

304. After receiving the ROHC parameters such as the ROHC compression and the identifier of the IP/UDP/GTP-U compression profile and the IP/UDP/APP. compression profile of the compressed header, the eNodeB may send a reconfiguration message to the relay node, where the network reconfiguration message includes PDCP parameters, and the PDCP parameters include ROHC compression parameters reconfigured for the DRB and supported by the DRB and the identifier of the IP/UDP/GTP-U compression profile and the IP/UDP/APP. compression profile of the compressed header. The frame structure of the compressed IP header is as shown in FIG. 3c.

This procedure may establish a context for two nested layers of ROHC compression between the eNodeB and the relay node.

In this embodiment, because of the existence of the relay node, air interface transmission occurs twice in the transmission between the UE and the eNodeB entity, and the two nested layers of ROHC compression may solve the problem of the header compression mechanism in different protocol stacks, save resources of two air interfaces, reduce the air interface load, and improve the spectrum utilization.

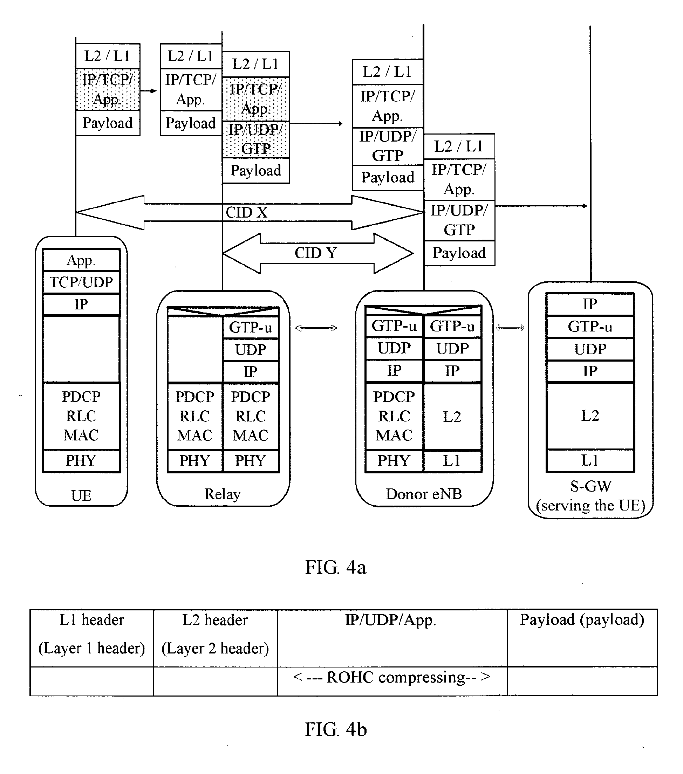

FIG. 4a is a schematic diagram of another method for header compression in a network relay scenario according to an embodiment of the present invention. In order to clearly distinguish a compressed part from a decompressed part, the dotted shade is used in the drawing to represent a compressed part.

In this embodiment, the media sent by the UE is compressed on the user plane by using the IP/UDP/App. header compression profile, and the relay node does not decompress the compressed IP/UDP/App. header but sends the compressed IP/UDP/App. header to the eNodeB entity.

The relay node receives a compressed data packet, encapsulates an IP/UDP/GTP-U header outside the header of the packet, where header compression may be performed for the IP/UDP/GTP-U header, and sends the packet to the eNodeB entity. The eNodeB entity decompresses the received and respectively compressed IP/UDP/GTP-U header and IP/UDP/App. header respectively, and sends the decompressed headers to a next network entity.

In this embodiment, no compression context is established between the UE and the relay node; a context for the compression profile of the IP/UDP/GTP-U header is established between the relay node and the eNodeB; and a context for the compression profile of the IP/UDP/App. header is established between the UE and the eNodeB.

The frame structure of the compressed IP header transmitted between the UE and the relay node is as shown in FIG. 4b. The compressed IP/UDP/App. header and the Payload portion of the IP packet of this frame structure are sent by the relay node directly to the eNodeB entity.

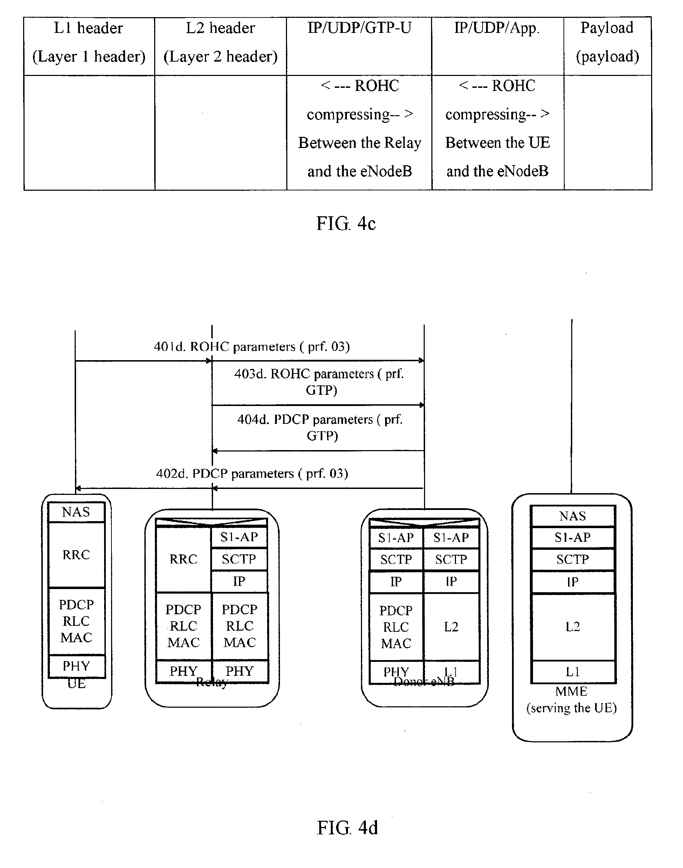

The frame structure of the compressed IP header for which a context for two nested layers of ROHC compression is established between the relay node and the eNodeB is as shown in FIG. 4c, where the IP/UDP/App. header is the header compressed by the UE entity and directly forwarded by the relay node, and the IP/UDP/GTP-U header is the header encapsulated by the relay node.

During the compression in the foregoing embodiment, a context for ROHC compression that supports the IP/UDP/APP. compression profile is established between the UE and the eNodeB, the relay node sends the received IP/UDP/APP. compressed header after the ROHC compression to the eNodeB entity directly, and the eNodeB entity is responsible for decompressing the IP/UDP/APP. compressed header; meanwhile, in the data packet sent to the eNodeB, the relay node adds the IP/UDP/GTP-U header, and performs the IP/UDP/GTP-U compression profile.

FIG. 4d shows a case of a configuration process of compression parameters necessary during the compression in this embodiment, which specifically includes the following:

401d: The UE sends a DRB establishment/configuration message, which includes ROHC parameters. The ROHC parameters sent at this time include a compression mechanism, such as ROHC compression, and a profile of the compressed header, such as IP/UDP/APP. At this time, the profile of ROHC compression supported by the UE is a separate IP/UDP/APP. compression profile, an IP/TCP compression profile, an IP/UDP compression profile, and so on. The PDCP parameter represents the UE's capability to support header compression. The profile of the compressed header is a compression profile of the compression mechanism with respect to a certain type of header combination.

402d: After the relay node receives the ROHC parameters sent by the UE, such as the ROHC compression, and the profile of the compressed header, in order to perform the header compression mechanism between the relay node and the air interface of the eNodeB entity, the relay node sends the received ROHC parameters to the eNodeB entity, where the ROHC parameters include the ROHC compression parameters requested by the UE and supported by the DRB, and the profile of the compressed header.

In order for the relay node to perform the header compression mechanism between the relay node and the air interface of the eNodeB entity, the user plane data sent between the relay node and the eNodeB further includes the IP/UDP/GTP-U header in addition to a payload, a Layer 1 header and a Layer 2 header, and the compressed IP/UDP/APP header received by the relay node. In this embodiment, the IP/UDP/GTP-U header also needs to be compressed.

The supported ROHC parameters sent by the relay node to the eNodeB include an identifier of the IP/UDP/GTP-U compression profile, which indicates that the relay node supports and requests the application of the IP/UDP/GTP-U compression, and the IP/UDP/APP. compression requested by the UE respectively in the requested DRB.

403d: After receiving the ROHC parameters such as the ROHC compression and the identifier of the IP/UDP/GTP-U compression profile and the IP/UDP/APP. compression profile of the compressed header, the eNodeB may send a reconfiguration message to the relay node, where the network reconfiguration message includes PDCP parameters, and the PDCP parameters include ROHC compression parameters reconfigured for the DRB and supported by the DRB and the identifier of the IP/UDP/GTP-U compression profile and the IP/UDP/APP. compression profile of the compressed header.

404d: The relay node sends the PDCP parameters to the UE, and may send a reconfiguration message to the UE, where the network reconfiguration message includes the PDCP parameters, and the PDCP parameters include ROHC compression parameters reconfigured for the DRB and supported by the DRB, and the profile of the compressed header. The frame structure of the compressed IP header is as shown in FIG. 4c.

This procedure may establish a context for two nested layers of ROHC compression between the UE, the relay node, and the eNodeB.

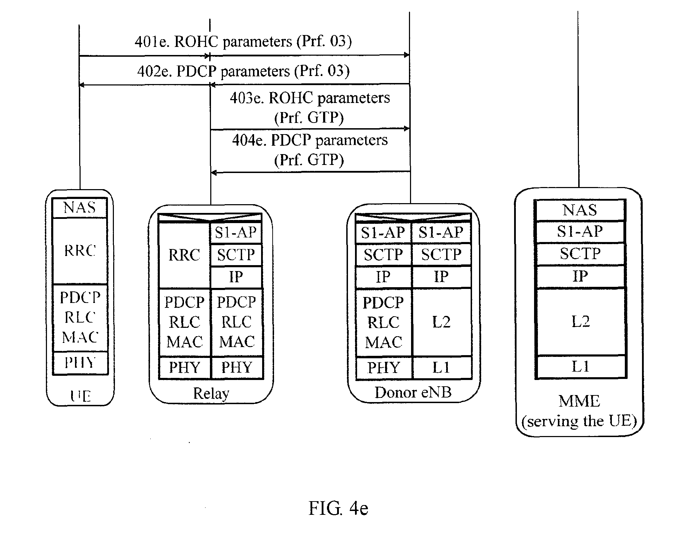

FIG. 4e shows another case of a configuration process of compression parameters necessary during the compression in this embodiment, which specifically includes the following:
401e: The UE sends a DRB establishment/configuration message that includes ROHC parameters. The ROHC parameters sent at this time include a compression mechanism, such as ROHC compression, and a profile of the compressed header, such as IP/UDP/APP. At this time, the profile of ROHC compression supported by the UE is a separate IP/UDP/APP. compression profile, an IP/TCP compression profile, an IP/UDP compression profile, and so on. The PDCP parameter represents the UE's capability to support header compression. The profile of the compressed header is a compression profile of the compression mechanism with respect to a certain type of header combination.
402e: The relay node sends PDCP parameters to the UE, and may send a reconfiguration message to the UE, where the network reconfiguration message includes PDCP parameters, and the PDCP parameters include ROHC compression parameters reconfigured for the DRB and supported by the DRB, and the profile of the compressed header. The frame structure of the compressed IP header is as shown in FIG. 4c.
403e: After receiving the ROHC parameters sent by the UE, such as the ROHC compression, and the profile of the compressed header, the relay node may use these parameters for performing the header compression mechanism between the relay node and the air interface of the eNodeB entity, and sends the received ROHC parameters sent by the UE to the eNodeB entity, where the ROHC parameters include the ROHC compression parameters requested by the UE and supported by the DRB, and the profile of the compressed header.

In order for the relay node to perform the header compression mechanism between the relay node and the air interface of the eNodeB entity, the user plane data sent between the relay node and the eNodeB further includes the IP/UDP/GTP-U header in addition to a payload, a Layer 1 header and a Layer 2 header, and the compressed IP/UDP/APP. header received by the relay node. In this embodiment, the IP/UDP/GTP-U header also needs to be compressed.

When the relay node sends the ROHC parameters received from the UE to the eNodeB entity, the relay node sends the eNodeB the supported ROHC parameters, including an identifier of the IP/UDP/GTP-U compression profile, which indicates that the relay node supports and requests the application of the IP/UDP/GTP-U compression, and the IP/UDP/APP. compression requested by the UE respectively, in the requested DRB.

404e: After receiving the ROHC parameters such as the ROHC compression and the identifier of the IP/UDP/GTP-U compression profile and the IP/UDP/APP. compression profile of the compressed header, the eNodeB may send a reconfiguration message to the relay node, where the network reconfiguration message may include PDCP parameters, and the PDCP parameters include ROHC compression parameters reconfigured for the DRB and supported by the DRB and the identifier of the IP/UDP/GTP-U compression profile and the IP/UDP/APP. compression profile of the compressed header.

This procedure may establish a context for two nested layers of ROHC compression between the UE, the relay node, and the eNodeB.

The embodiments corresponding to FIG. 4a to FIG. 4e provide a method for a relay node to compress a header and two methods for configuring compression parameters. Thereby, the problem that the IP packets occupy too much bandwidth in a network relay scenario is solved, and by applying the ROHC compression mechanism on the relay node, the eNB, and the UE, the function of compressing an IP header is solved and implemented; the occupation of air interface bandwidth is reduced; and the spectrum utilization is improved.

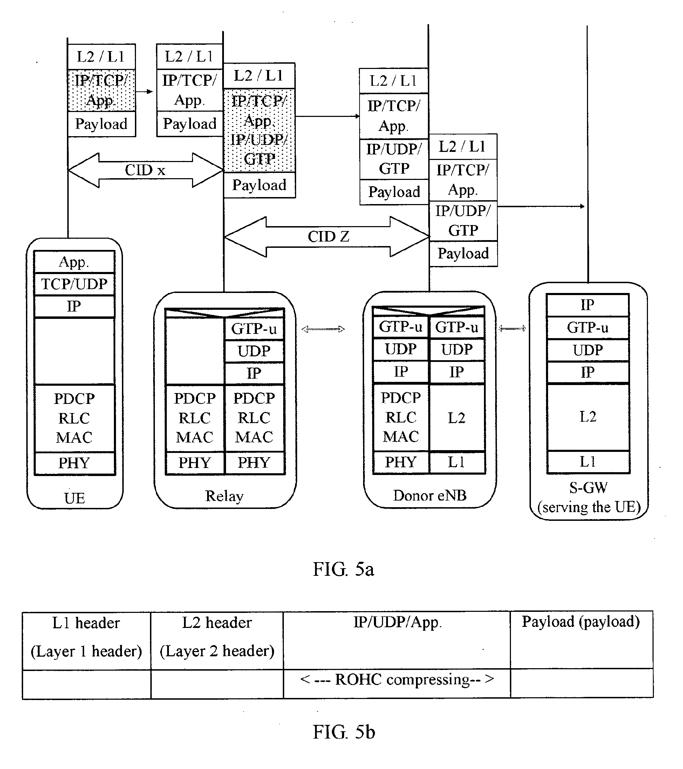

FIG. 5a is a schematic diagram of another method for header compression in a network relay scenario according to an embodiment of the present invention. In order to clearly distinguish a compressed part from a decompressed part, the dotted shade is used in the drawing to represent a compressed part.

In this embodiment, the media sent by the UE is compressed on the user plane by using a header compression profile and is decompressed on the relay node. The user plane data sent by the relay node to the eNodeB entity is compressed by using the IP/UDP/APP. and IP/UDP/GTP-U header compression profiles, and the eNodeB entity decompresses the IP header and sends the decompressed data packet to a next entity.

In this embodiment, a context for a compression profile for compressing an IP/UDP/APP. header is established between the UE and the relay node, and a context for a compression profile for an IP/UDP/APP. header and an IP/UDP/GTP-U header is established between the relay node and the eNodeB.

A frame structure of a compressed IP header for which a context for ROHC compression is established between the UE and the relay node is as shown in FIG. 5b.

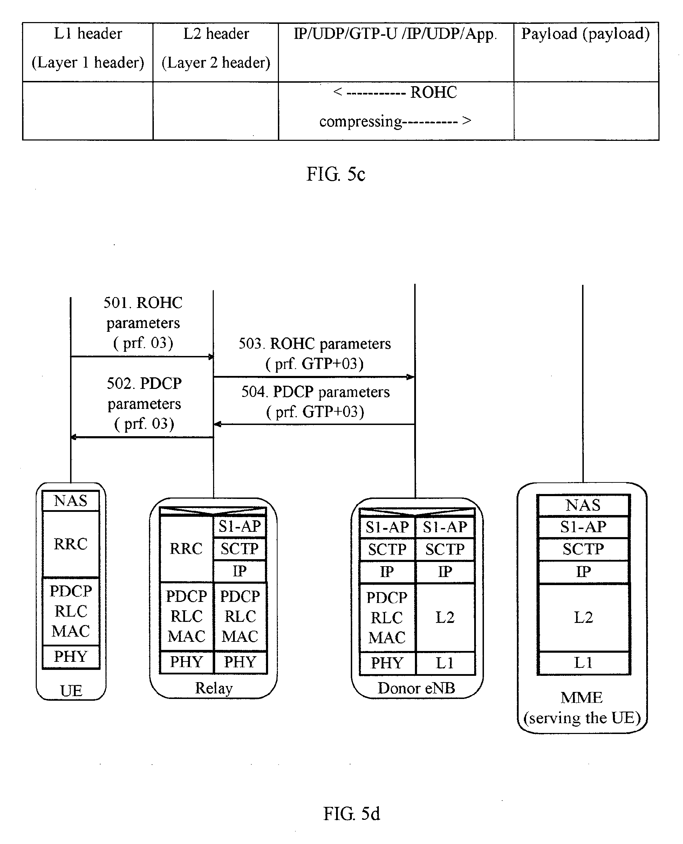

A frame structure of a compressed IP header for which a context for the ROHC compression of the IP/UDP/APP. and IP/UDP/GTP-U headers is established between the relay node and the eNodeB is as shown in FIG. 5c.

FIG. 5d shows a configuration process of compression parameters necessary during the compression in this embodiment, which is also called a negotiation process, and specifically includes the following:
501: The UE sends a DRB establishment/configuration message that includes ROHC parameters. The ROHC parameters sent at this time include a compression mechanism, such as ROHC compression, and a profile of the compressed header, such as IP/UDP/APP. At this time, the profile of ROHC compression supported by the UE is a separate IP/UDP/App. compression profile, an IP/TCP compression profile, an IP/UDP compression profile, and so on. The PDCP parameter represents the UE's capability to support header compression. The profile of the compressed header is a compression profile of the compression mechanism with respect to a certain type of header combination.
502: After receiving the ROHC parameters sent by the UE, such as the ROHC compression, and the profile of the compressed header, the relay node may send a reconfiguration message to the UE, where the network reconfiguration message includes PDCP parameters, and the PDCP parameters include ROHC compression parameters reconfigured for the DRB and supported by the DRB and the profile of the compressed header. The frame structure of the compressed IP header is as shown in FIG. 5b.

It should be noted that, step 502 may follow step 501 or may be performed after the relay node completes step 503 in the procedure.

This procedure may establish a context for the ROHC compression between the UE and the relay node.

503: In order for the relay node to perform the header compression mechanism between the relay node and the air interface of the eNodeB entity, the user plane data sent between the relay node and the eNodeB further includes the IP/UDP/GTP-U header in addition to a payload, a Layer 1 header and a Layer 2 header, and the IP/UDP/APP. header as shown in the drawing. In the foregoing embodiment, in addition to the IP/UDP/APP. header received by the relay node, the IP/UDP/GTP-U header is also compressed at the same time.

The relay node sends the eNodeB the supported ROHC parameters including a compression mechanism, such as ROHC compression, and the profile of the compressed header, where the compression profile here includes an indication of a compression profile for compressing the IP/UDP/GTP-U and IP/UDP/APP. headers, which indicates that the relay node supports and requests the application of the IP/UDP/GTP-U and IP/UDP/APP. compression profiles in the requested DRB.

504: After receiving the ROHC parameters such as the ROHC compression and the IP/UDP/GTP-U and IP/UDP/APP. compression profiles of the compressed header, the eNodeB may send a reconfiguration message to the relay node, where the network reconfiguration message includes PDCP parameters, and the PDCP parameters include ROHC compression parameters reconfigured for the DRB and supported by the DRB and the IP/UDP/GTP-U and IP/UDP/APP. compression profiles of the compressed header. The frame structure of the compressed IP header is as shown in FIG. 5c; this procedure may establish a context for two nested layers of ROHC compression between the eNodeB and the relay node.

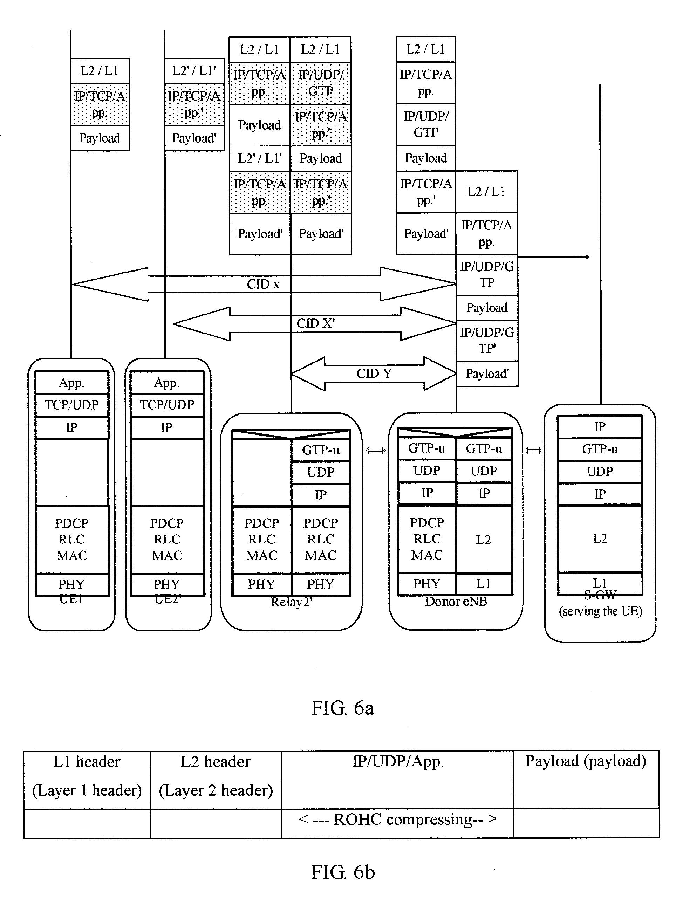

FIG. 6a is a schematic diagram of another method for header compression in a network relay scenario according to an embodiment of the present invention. In order to clearly distinguish a compressed part from a decompressed part, the dotted shade is used in the drawing to represent a compressed part.

In this embodiment, header compression for the IP/UDP/App. header is performed between the UE and the relay node with respect to the data sent by multiple UEs. For the data sent by the relay node to the eNodeB, the IP headers sent by the multiple UEs are encapsulated by using a same IP/UDP/GTP-U header, and the header compression profile of the IP/UDP/GTP-U header is performed.

In this embodiment, the header compression procedure in the third embodiment is adopted, that is, the relay node sends the received IP packets sent by UE1 and UE2 to the eNodeB entity directly. At this time, no compression context is established between the UEs and the relay node; a context for a compression profile of the IP/UDP/GTP-U header is established between the relay node and the eNodeB; and a context for a compression profile of the IP/UDP/App. header is established between UE1 and UE2 and the eNodeB. The frame structure of the compressed IP header transmitted between the UE and the relay node is as shown in FIG. 6b; and the IP packets of this frame structure are sent to the eNodeB entity directly by the relay node.

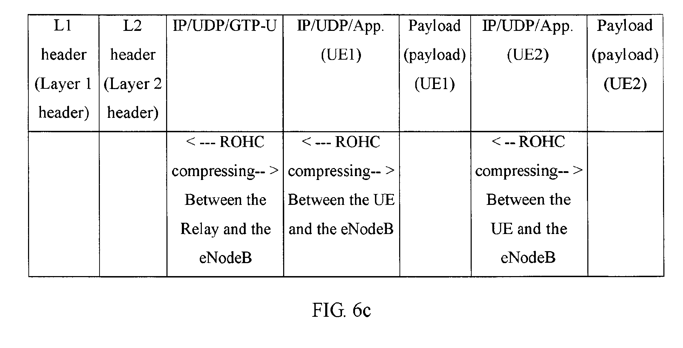

The frame structure of the compressed IP header for which the context for two nested layers of ROHC compression is established between the relay node and the eNodeB is as shown in FIG. 6c, where the IP/UDP/App. header is the header compressed by the UE entity and directly forwarded by the relay node, and the IP/UDP/GTP-U header is the header encapsulated by the relay node.

When decompressing the encapsulated data packets sent by UE1 and UE2, the eNodeB distinguishes the data packets by using the identifiers of the data sent by UE1 and UE2, where the identifiers of the data packets may be IP addresses, port numbers, user identities, header compression context identifiers, and so on.

In the implementation of this embodiment, the embodiment may also be implemented between the UE and the relay node according to the method described in the embodiment corresponding to FIG. 3, that is, the compressed IP/UDP/App. headers sent by the UEs are decompressed on the relay node; and then, when the relay node sends the data packets, compression is performed according to the compression method of this embodiment, as shown in the frame structures of FIG. 6b and FIG. 6c.

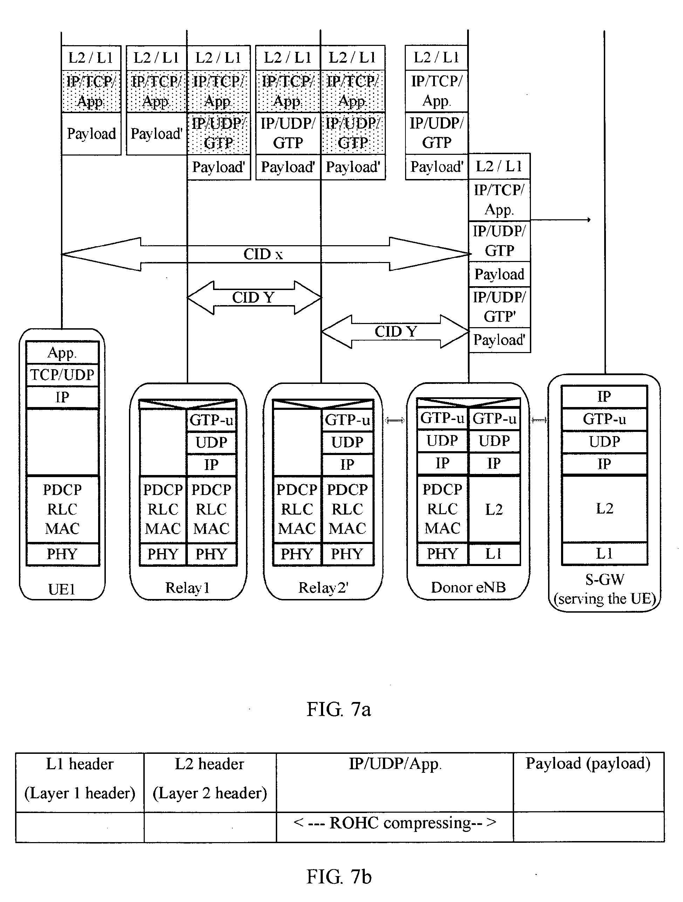

FIG. 7a is a schematic diagram of another method for header compression in a network relay scenario according to an embodiment of the present invention. In order to clearly distinguish a compressed part from a decompressed part, the dotted shade is used in the drawing to represent a compressed part.

In this embodiment, under the circumstance where there are multiple relay nodes between the UE and the eNodeB, the data packets sent by the UE are sent to the eNodeB via relay node 1 and relay node 2 as shown in the drawing. In this embodiment, both relay node 1 and relay node 2 send the received header-compressed data packets sent by the UE, to the eNodeB directly.

In this embodiment, header compression is performed for the IP/UDP/App. header of the data packet sent by the UE to relay node 1 and then the data packet is sent by relay node 1 to relay node 2 directly; and meanwhile, relay node 1 encapsulates the IP/UDP/GTP-U header in the data packet, and performs the compression of the header compression profile for the IP/UDP/GTP-U header.

Relay node 2 receives the compressed data packet sent by relay node 1 and decompresses the compressed IP/UDP/GTP-U header; encapsulates the IP/UDP/GTP-U header in the IP packet sent to the eNodeB, and performs the compression of the header compression profile for the IP/UDP/GTP-U header.

The compressed data packet received by the eNodeB entity from relay node 2 is encapsulated with the compressed IP/UDP/App. header, and the IP/UDP/GTP-U header compressed by relay node 2. The eNodeB entity decompresses the IP/UDP/App. header compressed by the UE and the IP/UDP/GTP-U header compressed by relay node 2, and sends the data packet to a next entity.

In this embodiment, the context for compressing the IP/UDP/GTP-U header is established between the UE and the eNodeB in case of forwarding by multiple relay nodes; the context for compressing the IP/UDP/GTP-U header is established between relay node 1 and relay node 2; and the context for compressing the IP/UDP/GTP-U header is established between relay node 2 and the eNodeB entity. The frame structure of the compressed IP header transmitted between the UE and the relay nodes is as shown in FIG. 7b.

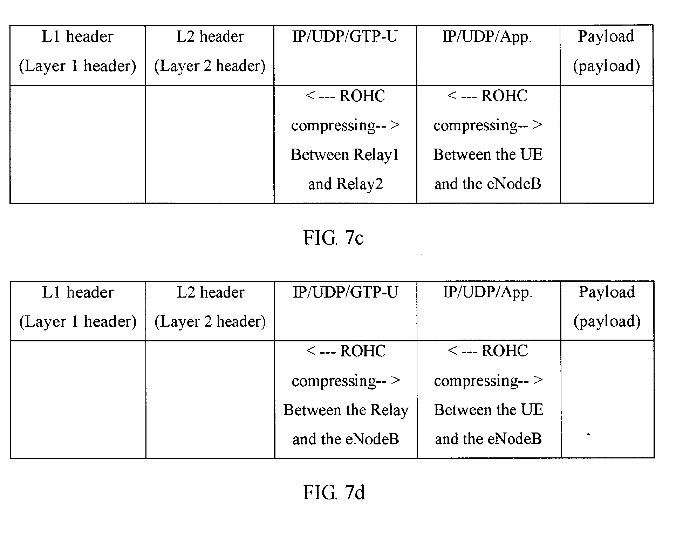

The frame structure of the compressed IP header for which the context for two nested layers of ROHC compression is established between relay node 1 and relay node 2 is as shown in FIG. 7c, where the IP/UDP/App. header is the header compressed by the UE entity and directly forwarded by the relay node, and the IP/UDP/GTP-U header is the header encapsulated by the relay node.

The frame structure of the compressed IP header for which the context for two nested layers of ROHC compression is established between relay node 2 and the eNodeB entity is as shown in FIG. 7d, where the IP/UDP/App. header is the header compressed by the UE entity and directly forwarded by the relay node, and the IP/UDP/GTP-U header is the header encapsulated by the relay node.

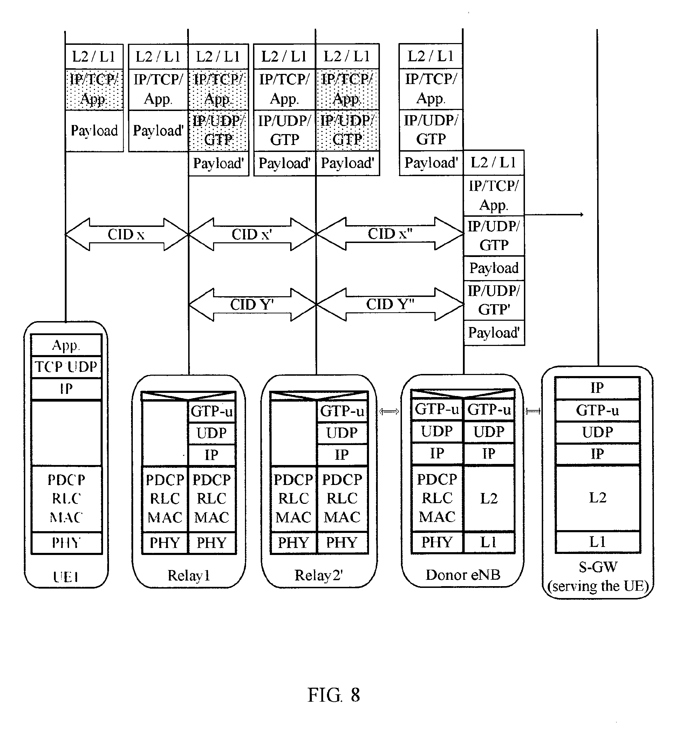

FIG. 8 is a schematic diagram of another method for header compression in a network relay scenario according to an embodiment of the present invention. In order to clearly distinguish a compressed part from a decompressed part, the dotted shade is used in the drawing to represent a compressed part.

In this embodiment, under the circumstance where there are multiple relay nodes between the UE and the eNodeB, a data packet sent by the UE is sent to the eNodeB via relay node 1 and relay node 2. In this embodiment, both relay node 1 and relay node 2 send the received header-compressed data packet sent by the UE, to the eNodeB directly.

In this embodiment, the UE performs header compression for the IP/UDP/App. header of the data packet sent by the UE to relay node 1, and after receiving the data packet, the intermediate entity 1 decompresses the compressed IP/UDP/App. header; the relay node encapsulates the IP/UDP/GTP-U header in the data packet, compresses the IP/UDP/App. header and the IP/UDP/GTP-U header respectively, and sends the data packet to relay node 2.

Relay node 2 receives the compressed data packet sent by relay node 1 and decompresses the compressed IP/UDP/App. header and IP/UDP/GTP-U header respectively; encapsulates the IP/UDP/GTP-U header in the IP packet sent to the eNodeB, and performs the compression of the header compression profile for the IP/UDP/App. header and the IP/UDP/GTP-U header.

The compressed data packet received by the eNodeB from relay node 2 is encapsulated with the compressed IP/UDP/App. header, and the IP/UDP/GTP-U header compressed by relay node 2. The eNodeB entity decompresses the IP/UDP/App. header compressed by the UE and the IP/UDP/GTP-U header compressed by relay node 2, and sends the data packet to a next entity.

In this embodiment, a context for compressing the IP/UDP/GTP-U header is established between the UE and relay node 1; a context for compressing the IP/UDP/GTP-U header is established between relay node 1 and relay node 2; and a context for compressing the IP/UDP/GTP-U header is established between relay node 2 and the eNodeB; a context for compressing the IP/UDP/GTP-U header is established between relay node 1 and relay node 2. The frame structure of the compressed IP header transmitted between the UE and the relay nodes is as shown in FIG. 7b.

The frame structure of the compressed IP header for which the context for two nested layers of ROHC compression is established between relay node 1 and relay node 2 is as shown in FIG. 7c, where the IP/UDP/App. header is the header compressed by the UE entity and directly forwarded by the relay node, and the IP/UDP/GTP-U header is the header encapsulated by the relay node.

The frame structure of the compressed IP header for which the context for two nested layers of ROHC compression is established between relay node 2 and the eNodeB entity is as shown in FIG. 7d, where the IP/UDP/App. header is the header compressed by the UE entity and directly forwarded by the relay node, and the IP/UDP/GTP-U header is the header encapsulated by the relay node.

The IP/UDP/GTP-U header compression profile involved in the foregoing method embodiment is described below, which specifically includes the following:

In a GTP-U General Packet Radio Service Tunneling Protocol-User Plane data packet defined by 3GPP, the encapsulated header includes the following information:
- GTP version ("001 ") GTP version
- PT flag (" 1") -protocol type protocol type
- Extension Header flag (" 1") extension header flag
- Sequence Number flag ("1") sequence number flag
- Message Type ("00000000") message type
- N-PDU number flag (" 1") -Network-Protocol Data Unit flag
- TEID ("00000000") tunnel identifier
- Sequence Number ("000000001") sequence number

The Sequence Number parameter is a monotonically increasing variable parameter, and other parameters are parameters that remain unchanged during the transmission of the GTP-U data packet. According to the ROHC compression architecture, the unchanged parameters are saved as a state on the compressor and the decompressor, that is, the information to be used when compression and decompression are performed; and the corresponding variable parameters are encapsulated in the compressed GTP-U header.

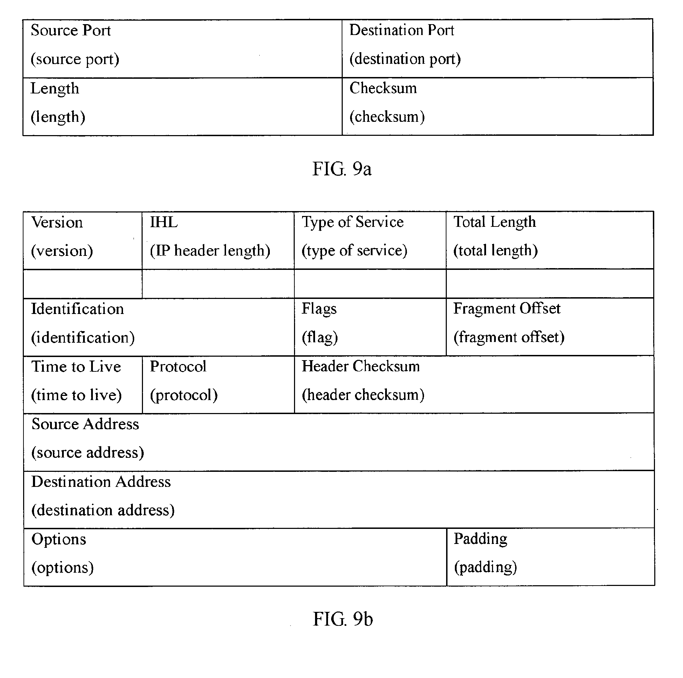

The UDP protocol is used for bearing the GTP-U protocol header, and the frame structure of the UDP packet is as shown in FIG. 9a, where, Source Port and Destination Port are unchanged parameters during the transmission of multiple data packets, and may be saved as a state on the compressor and the decompressor performing the compression profile.

The frame structure of the IPv4 header is as shown in FIG. 9b, where Version, Type of Service, Source Address, Destination Address, and Offset are unchanged parameters during the transmission of multiple data packets, and may be saved as a state on the compressor and the decompressor performing the compression profile.

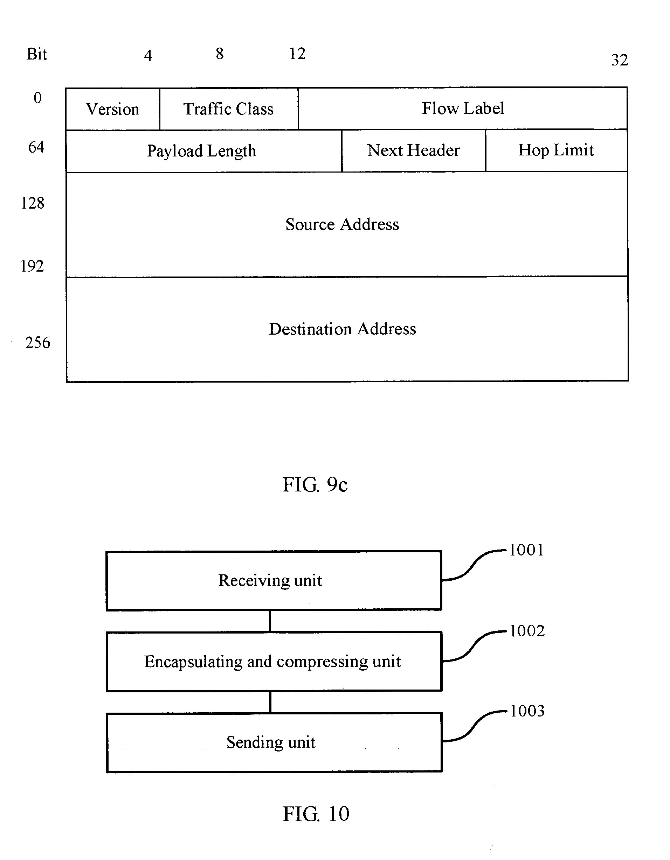

The frame structure of the IPv6 header is as shown in FIG. 9c, where the static header of the IPv6 data packet includes version, Flow Label, Source Address, and Destination Address; and the dynamically changing address includes Traffic Class, Hop Limit, Next Header, and Payload Length. Therefore, when the IPv6 header is being compressed, the static part may be used as the part of the header that is compressed by using the header compression method.

The static part of the foregoing IP header may be compressed by the basic compression method as the header compression profile (such as ROHC compression). For the non-static header part, the compression profile includes other optimization methods, for example, the method for predicating the header content may compress a part of non-static headers.

To sum up, under the circumstance where there is a relay node between the UE and the network and the interface between the relay node and the network is still a radio interface, in addition to being capable of processing the header-compressed data packets sent by the UE, the relay node still needs to face the problem of saving the air interface bandwidth between the relay node and the eNodeB, and the header compression of the data packets between the relay node and the eNodeB entity. The air interface transport protocol between the relay entity and the eNodeB uses different protocol stacks; different respective header compressions are used on the two air interfaces; and it is necessary to coordinate the nesting of respective compression profiles and to maintain the context between the compressor and the decompressor. By using the method provided in the foregoing embodiments of the present invention, the problem that the IP packets occupy too much bandwidth in a network relay scenario is solved effectively; and by applying the ROHC compression mechanism on the relay node, the eNB, and the UE, the function of compressing IP headers is solved and implemented; the occupation of air interface bandwidth is reduced; and the spectrum utilization is improved.

Persons of ordinary skill in the art may understand that all or part of steps in the foregoing embodiments may be implemented by a program instructing relevant hardware. The program may be stored in a computer readable storage medium, which may be a ROM, a RAM, a magnetic disk, and an optical disk.

FIG. 10 shows a relay node according to an embodiment of the present invention, which includes:
a receiving unit 1001, configured to receive a first header-compressed data packet sent by user equipment or another relay node;
an encapsulating and compressing unit 1002, configured to encapsulate a transport protocol header for the first data packet, and perform header compression for the header to form a second data packet; and
a sending unit 1003, configured to send the second data packet to an eNodeB or a next relay node.

The encapsulating and compressing unit 1002 is specifically configured to:
after decompressing the header of the first data packet, compress the decompressed header of the first data packet respectively by respectively using an IP/UDP/APP. compression profile and an IP/UDP/GTP-U compression profile, to respectively form the second data packet having two segments of compressed headers; or compress the IP/UDP/APP. header and the IP/UDP/GTP-U header into one segment of compressed headers to form the second data packet.

Alternatively, an IP/UDP/GTP-U header is encapsulated outside the IP/UDP/APP. header of the first header-compressed data packet, to form the second data packet.

The relay node provided in this embodiment can implement the functions of the relay nodes in all the foregoing method embodiments of the present invention, and further implement the methods provided in the embodiments. Thereby, the problem that the IP packets occupy too much bandwidth in a network relay scenario is solved; and by applying the ROHC compression mechanism on the relay node, the eNB, and the UE, the function of compressing IP headers is solved and implemented; the occupation of air interface bandwidth is reduced; and the spectrum utilization is improved.

It should be particularly noted that, all or part of the above units may be implemented by being integrated into a chip. The functional units in the embodiments of the present invention may be integrated into one processing module, or each unit may physically exist separately, or two or more units may be integrated into one module. The above integrated module may be implemented in the form of hardware or in the form of a software functional module. When being implemented in the form of a software functional module and being sold or used as an independent product, the above integrated module may also be stored in a computer readable storage medium. The storage medium may be a read only memory, a magnetic disk, and an optical disk.

The drawings and the relevant descriptions are only used to illustrate the principle of the present invention, and are not intended to limit the protection scope of the present invention. For example, the message names and entities in the embodiments of the present invention may vary according to the network, and some messages may also be omitted. Therefore, any modification, equivalent replacement, and improvement made without departing from principle of the present invention shall fall within the protection scope of the present invention.

Although the present invention has been illustrated and described with reference to some exemplary embodiments of the present invention, persons of ordinary skill in the art shall appreciate that various modifications in form or in detail may be made without departing from scope of the present invention.

## Claims

1. A method for header compression in a network relay scenario, comprising:
receiving (101), by a relay node, a first header-compressed data packet sent by user equipment or another relay node;
encapsulating (102) a transport protocol header for the first header-compressed data packet, and performing header compression for the transport protocol header to form a second data packet; and
sending (103) the second data packet to an eNodeB or a next relay node in an uplink direction,
**characterized in that**
the encapsulating (102) the transport protocol header for the first header-compressed data packet, and performing header compression for the transport protocol header, to form the second data packet comprise:
decompressing a header of the first header-compressed data packet to obtain an Internet Protocol/User Datagram Protocol/Application Protocol IP/UDP/APP., header;
encapsulating the decompressed first data packet with an Internet Protocol/User Datagram Protocol/General Packet Radio Service Tunneling Protocol - User Plane, IP/UDP/ GTP-U header; and
compressing the IP/UDP/APP. header by using an IP/UDP/APP. compression profile and compressing the IP/UDP/GTP-U header by using an IP/UDP/GTP-U compression profile to form the second data packet having two segments of compressed headers; or compressing the IP/UDP/APP. header and the IP/UDP/GTP-U header to form the second data packet having one segment of compressed headers.

2. The method according to claim1, wherein the transport protocol used for encapsulating the transport protocol header comprises: a tunneling protocol and a transport protocol for the tunneling protocol, wherein the tunneling protocol comprises: general packet radio service tunneling protocol-user plane, GTP-U.

3. The method according to claim 1, further comprising:
receiving (301, 501), by the relay node, a first robust IP header compression, ROHC, parameter sent by the user equipment and used for the first data packet; and
sending (302, 502), by the relay node, a first packet data convergence protocol, PDCP parameter supported by the relay node to the user equipment, wherein the first PDCP parameter comprises the first ROHC parameter; wherein
the decompressing the header of the first header-compressed data packet comprises:
decompressing, by the relay node, the header of the first header-compressed data packet according to the first ROHC parameter;
after the decompressing the header of the first header-compressed data packet, the method further comprises:
sending (303, 503), by the relay node, a second ROHC parameter for the second data packet to the eNodeB, so that the eNodeB decompresses the header of the second data packet according to the second ROHC parameter, wherein the second ROHC parameter comprises a profile used by the relay node for compressing the header of the second data packet; and
receiving (304, 504), by the relay node, a second PDCP parameter sent by the eNodeB and supported by the eNodeB, wherein the second PDCP parameter comprises the second ROHC parameter.

4. The method according to claim 3, wherein:
if the second data packet having two segments of compressed headers is formed,
the second ROHC parameter comprises: an IP/UDP/APP. compression profile and an IP/UDP/GTP-U compression profile;
or,
if the second data packet having one segment of compressed headers is formed,
the ROHC parameter comprises: a compression profile corresponding to the IP/UDP/APP. header and the IP/UDP/GTP-U header.

5. A method for header compression in a network relay scenario, comprising:
receiving (101), by a relay node, a first header-compressed data packet sent by user equipment or another relay node;
encapsulating (102) a transport protocol header for the first header-compressed data packet, and performing header compression for the transport protocol header to form a second data packet; and
sending (103) the second data packet to an eNodeB or a next relay node in an uplink direction,
**characterized in that**
the receiving, by the relay node, the first header-compressed data packet sent by the user equipment comprises:
receiving, by the relay node, the first header-compressed data packet, which is sent by the user equipment and encapsulated with an IP/UDP/APP.header that has undergone header compression; and
the encapsulating the transport protocol header for the first header-compressed data packet, and performing header compression for the transport protocol header comprise:
encapsulating an IP/UDP/GTP-U header outside the IP/UDP/APP. header of the first header-compressed data packet, and performing header compression for the IP/UDP/GTP-U header.

6. The method according to claim 5, further comprising:
receiving (401d), by the relay node, a third ROHC parameter sent by the user equipment and used for the first header-compressed data packet;
forwarding (402d), by the relay node, the third ROHC parameter to the eNodeB;
sending (402d), by the relay node, a fourth ROHC parameter for the second data packet to the eNodeB, so that the eNodeB decompresses the header of the second data packet according to the third ROHC parameter and the fourth ROHC parameter, wherein the fourth ROHC parameter comprises a profile used by the relay node for compressing the header of the second data packet;
receiving (403d), by the relay node, a PDCP parameter sent by the eNodeB and supported by the eNodeB, wherein the PDCP parameter comprises the third ROHC parameter and the fourth ROHC parameter; and
forwarding (404d), by the relay node, the PDCP parameter supported by the eNodeB to the user equipment.

7. The method according to claim 5, further comprising:
receiving (401e), by the relay node, a fifth ROHC parameter sent by the user equipment and used for the first data packet;
Sending (402e), by the relay node, a third PDCP parameter supported by the relay node to the user equipment, wherein the third PDCP parameter comprises the fifth ROHC parameter;
forwarding (401e), by the relay node, the fifth ROHC parameter to the eNodeB;
sending (403e), by the relay node, a sixth ROHC parameter for the second data packet to the eNodeB, so that the eNodeB decompresses the header of the second data packet according to the fifth ROHC parameter and the sixth ROHC parameter, wherein the sixth ROHC parameter comprises a profile used by the relay node for compressing the header of the second data packet; and
receiving (404e), by the relay node, a fourth PDCP parameter sent by the eNodeB and supported by the eNodeB, wherein the fourth PDCP parameter comprises the fifth ROHC parameter and the sixth ROHC parameter.

8. The method according to claim 7, wherein:
the fifth ROHC parameter comprises: an IP/UDP/APP. compression profile; and the sixth ROHC parameter comprises: an IP/UDP/GTP-U compression profile.

9. A method for header compression in a network relay scenario, comprising:
receiving (101), by a relay node, a first header-compressed data packet sent by user equipment or another relay node;
encapsulating (102) a transport protocol header for the first header-compressed data packet, and performing header compression for the transport protocol header to form a second data packet; and
sending (103) the second data packet to an eNodeB or a next relay node in an uplink direction,
**characterized in that**
the receiving, by the relay node, the first header-compressed data packet sent by another relay node comprises:
receiving, by the relay node, the first header-compressed data packet, which is sent by another relay node and encapsulated with an IP/UDP/APP. header and an IP/UDP/GTP-U header that have undergone header compression;
the encapsulating the transport protocol header for the first header-compressed data packet, and performing header compression for the transport protocol header to form the second data packet comprise:
decompressing the IP/UDP/APP. header and the IP/UDP/GTP-U header of the first header-compressed data packet; compressing the IP/UDP/APP. header by using an IP/UDP/APP. compression profile, and compressing the IP/UDP/GTP-U header by using an IP/UDP/GTP-U compression profile to form the second data packet having two segments of compressed headers, or compressing the IP/UDP/APP. header and the IP/UDP/GTP-U header to form the second data packet having one segment of compressed headers;
or,
decompressing the IP/UDP/GTP-U header of the first header-compressed data packet; and compressing the IP/UDP/GTP-U header by using the IP/UDP/GTP-U compression profile to form the second data packet having two segments of compressed headers, wherein the two segments of compressed headers comprise: the IP/UDP/APP. header and the IP/UDP/GTP-U header.

10. The method according to one of the claims 1 to 9, wherein:
the receiving, by the relay node, the first header-compressed data packet sent by the user equipment comprises:
receiving multiple first header-compressed data packets sent by multiple user equipment;
the encapsulating the transport protocol header for the first header-compressed data packet, and performing header compression for the transport protocol header to form the second data packet comprise:
encapsulating a same transport protocol header for the headers of the multiple first header-compressed data packets, and performing header compression for the transport protocol header to form a second data packet.

11. The method according to claim 10, wherein the second data packet is encapsulated with IP addresses and/or port numbers, wherein the IP addresses and/or port numbers are corresponding respectively to the multiple user equipment and for distinguishing data packets that are sent by the multiple user equipment and encapsulated with the same transport protocol header.

12. A relay node, comprising:
a receiving unit (1001), configured to receive a first header-compressed data packet sent by user equipment or another relay node;
an encapsulating and compressing unit (1002), configured to encapsulate a transport protocol header for the first header-compressed data packet received by the receiving unit, and perform header compression for the transport protocol header to form a second data packet; and
a sending unit (1003), configured to send the second data packet encapsulated by the encapsulating and compressing unit to an eNodeB or a next relay node in an uplink direction,
**characterized in that**
the encapsulating and compressing unit is configured to:
decompress a header of the first data packet to obtain an Internet Protocol/User Datagram Protocol/Application Protocol, IP/UDP/APP., header,
encapsulate the decompressed header of the first header-compressed data packet with an Internet Protocol/ User Datagram Protocol/General Packet Radio Service Tunneling Protocol - User Plane IP/UDP/GTP-U, header; and
compress the IP/UDP/APP. header by using an IP/UDP/APP. compression profile and compress the IP/UDP/GTP-U header by using an IP/UDP/GTP-U compression profile to form the second data packet having two segments of compressed headers; or compress the IP/UDP/APP. header and the IP/UDP/GTP-U header to form the second data packet having one segment of compressed headers.

13. A relay node, comprising:
a receiving unit (1001), configured to receive a first header-compressed data packet sent by user equipment or another relay node;
an encapsulating and compressing unit (1002), configured to encapsulate a transport protocol header for the first header-compressed data packet received by the receiving unit, and perform header compression for the transport protocol header to form a second data packet; and
a sending unit (1003), configured to send the second data packet encapsulated by the encapsulating and compressing unit to an eNodeB or a next relay node in an uplink direction,
**characterized in that**
the encapsulating and compressing unit is configured to:
encapsulate an IP/UDP/GTP-U header outside an IP/UDP/APP. header of the first header-compressed data packet to form the second data packet, and performing header compression for the IP/UDP/GTP-U header.

## Patentansprüche

1. Verfahren zur Header-Kompression in einem Netzwerkrelais-Szenarium, umfassend:
Empfangen (101), durch einen Relaisknoten, eines ersten Header-komprimierten Datenpakets, gesandt durch Benutzerausrüstung oder einen anderen Relaisknoten;
Verkapseln (102) eines Transportprotokoll-Headers für das erste Header-komprimierte Datenpaket und Durchführen von Header-Kompression für den Transportprotokoll-Header, um ein zweites Datenpaket zu bilden; und
Senden (103) des zweiten Datenpakets an einen eNodeB oder einen nächsten Relaisknoten in einer Aufwärtsverbindungsrichtung,
**dadurch gekennzeichnet, dass**
das Verkapseln (102) des Transportprotokoll-Headers für das erste Header-komprimierte Datenpaket und Durchführen von Header-Kompression für den Transportprotokoll-Header zum Bilden des zweiten Datenpakets umfassen:
Dekomprimieren eines Headers des ersten Header-komprimierten Datenpakets, um einen Internetprotokoll/Benutzer-Datagramm-Protokoll/Anwendungsprotokoll- bzw. IP/UDP/APP.-Header zu erhalten;
Verkapseln des dekomprimierten ersten Datenpakets mit einem Internetprotokoll/Benutzer-Datagramm-Protokoll/Allgemeiner-paketvermittelter-Funkdienst-Tunnelprotokoll-Benutzerebenen- bzw. IP/UDP/GTP-U-Header; und
Komprimieren des IP/UDP/APP.-Headers durch Verwendung eines IP/UDP/APP.-Kompressionsprofils und Komprimieren des IP/UDP/GTP-U-Headers durch Verwendung eines IP/UDP/GTP-U-Kompressionsprofils, um das zweite Datenpaket zu bilden, das zwei Segmente komprimierter Header aufweist; oder Komprimieren des IP/UDP/APP.-Headers und des IP/UDP/GTP-U-Headers, um das zweite Datenpaket zu bilden, das ein Segment komprimierter Header aufweist.

2. Verfahren nach Anspruch 1, wobei das zum Verkapseln des Transportprotokoll-Headers verwendete Transportprotokoll umfasst: ein Tunnelprotokoll und ein Transportprotokoll für das Tunnelprotokoll, wobei das Tunnelprotokoll umfasst: Allgemeiner-paketvermittelter-Funkdienst-Tunnelprotokoll-Benutzerebene, GTP-U.

3. Verfahren nach Anspruch 1, ferner umfassend:
Empfangen (301, 501), durch den Relaisknoten, eines ersten Robuste-IP-Headerkompression- bzw. ROHC-Parameters, gesandt durch die Benutzerausrüstung und verwendet für das erste Datenpaket; und
Senden (302, 502), durch den Relaisknoten, eines von dem Relaisknoten unterstützten ersten Paketdaten-Konvergenzprotokoll- bzw. PDCP-Parameters an die Benutzerausrüstung, wobei der erste PDCP-Parameter den ersten ROHC-Parameter umfasst; wobei
das Dekomprimieren des Headers des ersten Header-komprimierten Datenpakets umfasst:
Dekomprimieren, durch den Relaisknoten, des Headers des ersten Header-komprimierten Datenpakets gemäß dem ersten ROHC-Parameter;
nach dem Dekomprimieren des Headers des ersten Header-komprimierten Datenpakets umfasst das Verfahren ferner:
Senden (303, 503), durch den Relaisknoten, eines zweiten ROHC-Parameters für das zweite Datenpaket an den eNodeB, so dass der eNodeB den Header des zweiten Datenpakets gemäß dem zweiten ROHC-Parameter dekomprimiert, wobei der zweite ROHC-Parameter ein durch den Relaisknoten zum Komprimieren des Headers des zweiten Datenpakets verwendetes Profil umfasst; und
Empfangen (304, 504), durch den Relaisknoten, eines zweiten PDCP-Parameters, gesandt durch den eNodeB und unterstützt durch den eNodeB, wobei der zweite PDCP-Parameter den zweiten ROHC-Parameter umfasst.

4. Verfahren nach Anspruch 3, wobei:
wenn das zweite Datenpaket, das zwei Segmente komprimierter Header aufweist, gebildet wird,
der zweite ROHC-Parameter umfasst: ein IP/UDP/APP.-Kompressionsprofil und ein IP/UDP/GTP-U-Kompressionsprofil;
oder,
wenn das zweite Datenpaket, das ein Segment komprimierter Header aufweist, gebildet wird,
der ROHC-Parameter umfasst: ein mit dem IP/UDP/APP.-Header und dem IP/UDP/GTP-U-Header korrespondierendes Kompressionsprofil.

5. Verfahren zur Header-Kompression in einem Netzwerkrelais-Szenarium, umfassend:
Empfangen (101), durch einen Relaisknoten, eines ersten Header-komprimierten Datenpakets, gesandt durch Benutzerausrüstung oder einen anderen Relaisknoten;
Verkapseln (102) eines Transportprotokoll-Headers für das erste Header-komprimierte Datenpaket und Durchführen von Header-Kompression für den Transportprotokoll-Header, um ein zweites Datenpaket zu bilden; und
Senden (103) des zweiten Datenpakets an einen eNodeB oder einen nächsten Relaisknoten in einer Aufwärtsverbindungsrichtung,
**dadurch gekennzeichnet, dass**
das Empfangen, durch den Relaisknoten, des durch die Benutzerausrüstung gesandten ersten Header-komprimierten Datenpakets umfasst:
Empfangen, durch den Relaisknoten, des ersten Header-komprimierten Datenpakets, der durch die Benutzerausrüstung gesandt und mit einem IP/UDP/APP.-Header, der Header-Kompression unterzogen wurde, verkapselt wird; und
das Verkapseln des Transportprotokoll-Headers für das erste Header-komprimierte Datenpaket und Durchführen von Header-Kompression für den Transportprotokoll-Header umfassen:
Verkapseln eines IP/UDP/GTP-U-Headers außerhalb des IP/UDP/APP.-Headers des ersten Header-komprimierten Datenpakets und Durchführen von Header-Kompression für den IP/UDP/GTP-U-Header.

6. Verfahren nach Anspruch 5, ferner umfassend:
Empfangen (401 d), durch den Relaisknoten, eines dritten ROHC-Parameters, gesandt durch die Benutzerausrüstung und verwendet für das erste Header-komprimierte Datenpaket;
Weiterleiten (402d), durch den Relaisknoten, des dritten ROHC-Parameters an den eNodeB;
Senden (402d), durch den Relaisknoten, eines vierten ROHC-Parameters für das zweite Datenpaket an den eNodeB, so dass der eNodeB den Header des zweiten Datenpakets gemäß dem dritten ROHC-Parameter und dem vierten ROHC-Parameter dekomprimiert, wobei der vierte ROHC-Parameter ein durch den Relaisknoten zum Komprimieren des Headers des zweiten Datenpakets verwendetes Profil umfasst;
Empfangen (403d), durch den Relaisknoten, eines PDCP-Parameters, gesandt durch den eNodeB und unterstützt durch den eNodeB, wobei der PDCP-Parameter den dritten ROHC-Parameter und den vierten ROHC-Parameter umfasst; und
Weiterleiten (404d), durch den Relaisknoten, des durch den eNodeB unterstützten PDCP-Parameters an die Benutzerausrüstung.

7. Verfahren nach Anspruch 5, ferner umfassend:
Empfangen (401 e), durch den Relaisknoten, eines fünften ROHC-Parameters, gesandt durch die Benutzerausrüstung und verwendet für das erste Datenpaket;
Senden (402e), durch den Relaisknoten, eines durch den Relaisknoten unterstützten dritten PDCP-Parameters an die Benutzerausrüstung, wobei der dritte PDCP-Parameter den fünften ROHC-Parameter umfasst;
Weiterleiten (401 e), durch den Relaisknoten, des fünften ROHC-Parameters an den eNodeB;
Senden (403e), durch den Relaisknoten, eines sechsten ROHC-Parameters für das zweite Datenpaket an den eNodeB, so dass der eNodeB den Header des zweiten Datenpakets gemäß dem fünften ROHC-Parameter und dem sechsten ROHC-Parameter dekomprimiert, wobei der sechste ROHC-Parameter ein durch den Relaisknoten zum Komprimieren des Headers des zweiten Datenpakets verwendetes Profil umfasst; und
Empfangen (404e), durch den Relaisknoten, eines vierten PDCP-Parameters, gesandt durch den eNodeB und unterstützt durch den eNodeB, wobei der vierte PDCP-Parameter den fünften ROHC-Parameter und den sechsten ROHC-Parameter umfasst.

8. Verfahren nach Anspruch 7, wobei:
der fünfte ROHC-Parameter umfasst: ein IP/UDP/APP.-Kompressionsprofil; und der sechste ROHC-Parameter umfasst: ein IP/UDP/GTP-U-Kompressionsprofil.

9. Verfahren zur Header-Kompression in einem Netzwerkrelais-Szenarium, umfassend:
Empfangen (101), durch einen Relaisknoten, eines ersten Header-komprimierten Datenpakets, gesandt durch Benutzerausrüstung oder einen anderen Relaisknoten;
Verkapseln (102) eines Transportprotokoll-Headers für das erste Header-komprimierte Datenpaket und Durchführen von Header-Kompression für den Transportprotokoll-Header, um ein zweites Datenpaket zu bilden; und
Senden (103) des zweiten Datenpakets an einen eNodeB oder einen nächsten Relaisknoten in einer Aufwärtsverbindungsrichtung,
**dadurch gekennzeichnet, dass**
das Empfangen, durch den Relaisknoten, des durch einen anderen Relaisknoten gesandten ersten Header-komprimierten Datenpakets umfasst:
Empfangen, durch den Relaisknoten, des ersten Header-komprimierten Datenpakets, das durch einen anderen Relaisknoten gesandt und mit einem IP/UDP/APP.-Header und einem IP/UDP/GTP-U-Header, die Header-Kompression unterzogen wurden, verkapselt wird;
das Verkapseln des Transportprotokoll-Headers für das erste Header-komprimierte Datenpaket und Durchführen von Header-Kompression für den Transportprotokoll-Header zum Bilden des zweiten Datenpakets umfassen:
Dekomprimieren des IP/UDP/APP.-Headers und des IP/UDP/GTP-U-Headers des ersten Header-komprimierten Datenpakets; Komprimieren des IP/UDP/APP.-Headers durch Verwendung eines IP/UDP/APP.-Kompressionsprofils und Komprimieren des IP/UDP/GTP-U-Headers durch Verwendung eines IP/UDP/GTP-U-Kompressionsprofils, um das zweite Datenpaket zu bilden, das zwei Segmente komprimierter Header aufweist; oder Komprimieren des IP/UDP/APP.-Headers und des IP/UDP/GTP-U-Headers, um das zweite Datenpaket zu bilden, das ein Segment komprimierter Header aufweist;
oder
Dekomprimieren des IP/LTDP/GTP-U-Headers des ersten Header-komprimierten Datenpakets; und Komprimieren des IP/UDP/GTP-U-Headers durch Verwendung des IP/UDP/GTP-U-Kompressionsprofils, um das zweite Datenpaket zu bilden, das zwei Segmente komprimierter Header aufweist, wobei die zwei Segmente komprimierter Header umfassen: den IP/UDP/APP.-Header und den IP/UDP/GTP-U-Header.

10. Verfahren nach einem der Ansprüche 1 bis 9, wobei:
das Empfangen, durch den Relaisknoten, des durch die Benutzerausrüstung gesandten ersten Header-komprimierten Datenpakets umfasst:
Empfangen mehrerer erster Header-komprimierter Datenpakete, gesandt von mehreren Benutzerausrüstungen;
das Verkapseln des Transportprotokoll-Headers für das erste Header-komprimierte Datenpaket und Durchführen von Header-Kompression für den Transportprotokoll-Header zum Bilden des zweiten Datenpakets umfassen:
Verkapseln eines gleichen Transportprotokoll-Headers für die Header der mehreren ersten Header-komprimierten Datenpakete und Durchführen von Header-Kompression für den Transportprotokoll-Header, um ein zweites Datenpaket zu bilden.

11. Verfahren nach Anspruch 10, wobei das zweite Datenpaket mit IP-Adressen und/oder Portnummern verkapselt wird, wobei die IP-Adressen und/oder Portnummem jeweils mit den mehreren Benutzerausrüstungen korrespondieren, und zum Unterscheiden von Datenpaketen, die von den mehreren Benutzerausrüstungen gesandt werden und mit dem gleichen Transportprotokoll-Header verkapselt sind.

12. Relaisknoten, umfassend:
eine Empfangseinheit (1001), konfiguriert zum Empfangen eines ersten Header-komprimierten Datenpakets, gesandt durch Benutzerausrüstung oder einen anderen Relaisknoten;
eine Verkapselungs- und Kompressionseinheit (1002), konfiguriert zum Verkapseln eines Transportprotokoll-Headers für das durch die Empfangseinheit empfangene erste Header-komprimierte Datenpaket und Durchführen von Header-Kompression für den Transportprotokoll-Header, um ein zweites Datenpaket zu bilden; und
eine Sendeeinheit (1003), konfiguriert zum Senden des durch die Verkapselungs- und Kompressionseinheit verkapselten zweiten Datenpakets an einen eNodeB oder einen nächsten Relaisknoten in einer Aufwärtsverbindungsrichtung,
**dadurch gekennzeichnet, dass**
die Verkapselungs- und Kompressionseinheit konfiguriert ist zum:
Dekomprimieren eines Headers des ersten Datenpakets, um einen Internetprotokoil/Benutzer-Datagramm-Protokoll/Anwendungsprotokoll- bzw. IP/UDP/APP.-Header zu erhalten;
Verkapseln des dekomprimierten Headers des ersten Header-komprimierten Datenpakets mit einem Internetprotokoll/Benutzer-Datagramm-Protokoll/Allgemeiner-paketvermittelter-Funkdienst-Tunnelprotokoll-Benutzerebenen- bzw. IP/UDP/GTP-U-Header; und
Komprimieren des IP/UDP/APP.-Headers durch Verwendung eines IP/UDP/APP.-Kompressionsprofils und Komprimieren des IP/UDP/GTP-U-Headers durch Verwendung eines IP/UDP/GTP-U-Kompressionsprofils, um das zweite Datenpaket zu bilden, das zwei Segmente komprimierter Header aufweist; oder Komprimieren des IP/UDP/APP.-Headers und des IP/UDP/GTP-U-Headers, um das zweite Datenpaket zu bilden, das ein Segment komprimierter Header aufweist.

13. Relaisknoten, umfassend:
eine Empfangseinheit (1001), konfiguriert zum Empfangen eines ersten Header-komprimierten Datenpakets, gesandt durch Benutzerausrüstung oder einen anderen Relaisknoten;
eine Verkapselungs- und Kompressionseinheit (1002), konfiguriert zum Verkapseln eines Transportprotokoll-Headers für das durch die Empfangseinheit empfangene erste Header-komprimierte Datenpaket und Durchführen von Header-Kompression für den Transportprotokoll-Header, um ein zweites Datenpaket zu bilden; und
eine Sendeeinheit (1003), konfiguriert zum Senden des durch die Verkapselungs- und Kompressionseinheit verkapselten zweiten Datenpakets an einen eNodeB oder einen nächsten Relaisknoten in einer Aufwärtsverbindungsrichtung,
**dadurch gekennzeichnet, dass**
die Verkapselungs- und Kompressionseinheit konfiguriert ist zum:
Verkapseln eines IP/UDP/GTP-U-Headers außerhalb eines IP/UDP/APP.-Headers des ersten Header-komprimierten Datenpakets, um das zweite Datenpaket zu bilden, und Durchführen von Header-Kompression für den IP/UDP/GTP-U-Header.

## Revendications

1. Procédé de compression d'entête dans un scénario de relais de réseau, comprenant :
la réception (101), par un noeud relais, d'un premier paquet de données à entête comprimé envoyé par un équipement d'utilisateur ou un autre noeud relais ;
l'encapsulation (102) d'un entête de protocole de transport pour le premier paquet de données à entête comprimé, et l'exécution d'une compression d'entête pour l'entête de protocole de transport afin de former un deuxième paquet de données ;
l'envoi (103) du deuxième paquet de données à un noeud B évolué (eNodeB) ou à un noeud relais suivant dans une direction de liaison montante,
**caractérisé en ce que**
l'encapsulation (102) de l'entête de protocole de transport pour le premier paquet de données à entête comprimé, et l'exécution d'une compression d'entête pour l'entête de protocole de transport, afin de former le deuxième paquet de données comprennent :
la décompression d'un entête du premier paquet de données à entête comprimé pour obtenir un entête de Protocole Internet/Protocole de Datagramme Utilisateur/Protocole d'Application, IP/UDP/APP. (Internet Protocol/User Datagram Protocol/Application Protocol) ;
l'encapsulation du premier paquet de données décomprimé avec un entête de Protocole Internet/Protocole de Datagramme Utilisateur/Protocole de Tunnélisation de Service Général de Radiocommunication par paquets-Plan Utilisateur,
IP/UDP/GTP-U (Internet Protocol/User Datagram Protocol/General Packet Radio Service Tunneling Protocol - User Plane) ; et
la compression de l'entête IP/UDP/APP. en utilisant un profil de compression IP/UDP/APP. et la compression de l'entête IP/UDP/GTP-U en utilisant un profil de compression IP/UDP/GTP-U afin de former le deuxième paquet de données comportant deux segments d'entêtes comprimés ; ou la compression de l'entête IP/UDP/APP. et de l'entête IP/UDP/GTP-U afin de former le deuxième paquet de données comportant un segment d'entêtes comprimés.

2. Procédé selon la revendication 1, dans lequel le protocole de transport utilisé pour encapsuler l'entête de protocole de transport comprend : un protocole de tunnélisation et un protocole de transport destiné au protocole de tunnélisation, dans lequel le protocole de tunnélisation comprend : un Protocole de Tunnélisation de Service Général de Radiocommunication par Paquets Plan Utilisateur, GTP-U.

3. Procédé selon la revendication 1, comprenant en outre :
la réception (301, 501), par le noeud relais, d'un premier paramètre de compression d'entête IP robuste, ROHC (Robust Header Compression), envoyé par l'équipement d'utilisateur et utilisé pour le premier paquet de données ; et
l'envoi (302, 502), par le noeud relais, d'un premier paramètre de protocole de convergence de données par paquets, PDCP (Packet Data Convergence Protocol), pris en charge par le noeud relais, à l'équipement d'utilisateur, dans lequel le premier paramètre PDCP comprend le premier paramètre ROHC ; dans lequel la décompression de l'entête du premier paquet de données à entête comprimé comprend :
la décompression, par le noeud relais, de l'entête du premier paquet de données à entête comprimé conformément au premier paramètre ROHC ;
après la décompression de l'entête du premier paquet de données à entête comprimé, le procédé comprend en outre :
l'envoi (303, 503), par le noeud relais, d'un deuxième paramètre ROHC pour le deuxième paquet de données à l'eNodeB, de manière à ce que l'eNodeB décomprime l'entête du deuxième paquet de données conformément au deuxième paramètre ROHC, dans lequel le deuxième paramètre ROHC comprend un profil utilisé par le noeud relais pour comprimer l'entête du deuxième paquet de données ; et
la réception (304, 504), par le noeud relais, d'un deuxième paramètre PDCP envoyé par l'eNodeB et pris en charge par l'eNodeB, dans lequel le deuxième paramètre PDCP comprend le deuxième paramètre ROHC.

4. Procédé selon la revendication 3, dans lequel :
si le deuxième paquet de données comportant deux segments d'entêtes comprimés est formé, le deuxième paramètre ROHC comprend : un profil de compression IP/UDP/APP. et un profil de compression IP/UDP/GTP-U ;
ou
si le deuxième paquet de données ayant un segment d'entêtes comprimés est formé,
le paramètre ROHC comprend : un profil de compression correspondant à l'entête IP/UDP/APP. et à l'entête IP/UDP/GTP-U.

5. Procédé de compression d'entête dans un scénario de relais de réseau, comprenant:
la réception (101), par un noeud relais, d'un premier paquet de données à entête comprimé envoyé par un équipement d'utilisateur ou par un autre noeud relais ;
l'encapsulation (102) d'un entête de protocole de transport pour le premier paquet de données à entête comprimé, et l'exécution d'une compression d'entête pour l'entête de protocole de transport afin de former un deuxième paquet de données ; et
l'envoi (103) du deuxième paquet de données à un eNodeB ou à un noeud relais suivant dans une direction de liaison montante,
**caractérisé en ce que**
la réception, par le noeud relais, du premier paquet de données à entête comprimé envoyé par l'équipement d'utilisateur comprend :
la réception, par le noeud relais, du premier paquet de données à entête comprimé, qui est envoyé par l'équipement utilisateur et est encapsulé avec un entête IP/UDP/APP. ayant été soumis à une compression d'entête ; et
l'encapsulation de l'entête de protocole de transport pour le premier paquet de données à entête comprimé, et l'exécution d'une compression d'entête pour l'entête de protocole de transport comprennent :
l'encapsulation d'un entête IP/UDP/GTP-U à l'extérieur de l'entête IP/UDP/APP. du premier paquet de données à entête comprimé, et l'exécution d'une compression d'entête pour l'entête IP/UDP/GTP-U.

6. Procédé selon la revendication 5, comprenant en outre :
la réception (401d), par le noeud relais, d'un troisième paramètre ROHC envoyé par l'équipement d'utilisateur et utilisé pour le premier paquet de données à entête comprimé ;
le réacheminement (402d), par le noeud relais, du troisième paramètre ROHC à l'eNodeB ;
l'envoi (402d), par le noeud relais, d'un quatrième paramètre ROHC pour le deuxième paquet de données à l'eNodeB, de manière à ce que l'eNodeB décomprime l'entête du deuxième paquet de données conformément au troisième paramètre ROHC et au quatrième paramètre ROHC, dans lequel le quatrième paramètre ROHC comprend un profil utilisé par le noeud relais pour comprimer l'entête du deuxième paquet de données ;
la réception (403d), par le noeud relais, d'un paramètre PDCP envoyé par l'eNodeB et pris en charge par l'eNodeB, dans lequel le paramètre PDCP comprend le troisième paramètre ROHC et le quatrième paramètre ROHC ; et
le réacheminement (404d), par le noeud relais, du paramètre PDCP pris en charge par l'eNodeB à l'équipement d'utilisateur.

7. Procédé selon la revendication 5, comprenant en outre :
la réception (401e), par le noeud relais, d'un cinquième paramètre ROHC envoyé par l'équipement d'utilisateur et utilisé pour le premier paquet de données ;
l'envoi (402e), par le noeud relais, d'un troisième paramètre PDCP pris en charge par le noeud relais à l'équipement d'utilisateur, dans lequel le troisième paramètre PDCP comprend le cinquième paramètre ROHC ;
le réacheminement (401e), par le noeud relais, du cinquième paramètre ROHC à l'eNodeB ;
l'envoi (403e), par le noeud relais, d'un sixième paramètre ROHC pour le deuxième paquet de données à l'eNodeB, de manière à ce que l'eNodeB décomprime l'entête du deuxième paquet de données conformément au cinquième paramètre ROHC et au sixième paramètre ROHC, dans lequel le sixième paramètre ROHC comprend un profil utilisé par le noeud relais pour comprimer l'entête du deuxième paquet de données ; et
la réception (404e), par le noeud relais, d'un quatrième paramètre PDCP envoyé par l'eNodeB et pris en charge par l'eNodeB, dans lequel le quatrième paramètre PDCP comprend le cinquième paramètre ROHC et le sixième paramètre ROHC.

8. Procédé selon la revendication 7, dans lequel :
le cinquième paramètre ROHC comprend : un profil de compression IP/UDP/APP. ;
et le sixième paramètre ROHC comprend : un profil de compression IP/UDP/GTP-U.

9. Procédé de compression d'entête dans un scénario de relais de réseau, comprenant :
la réception (101), par un noeud relais, d'un premier paquet de données à entête comprimé envoyé par un équipement d'utilisateur ou un autre noeud relais ;
l'encapsulation (102) d'un entête de protocole de transport pour le premier paquet de données à entête comprimé, et l'exécution d'une compression d'entête pour l'entête de protocole de transport afin de former un deuxième paquet de données ; et
l'envoi (103) du deuxième paquet de données à un noeud eNodeB ou à un noeud relais suivant dans une direction de liaison montante,
**caractérisé en ce que**
la réception, par le noeud relais, du premier paquet de données à entête comprimé envoyé par un autre noeud relais comprend :
la réception, par le noeud relais, du premier paquet de données à entête comprimé, envoyé par un autre noeud relais et encapsulé avec un entête IP/UDP/APP. et un entête IP/UDP/GTP-U ayant été soumis à une compression d'entête ;
l'encapsulation de l'entête de protocole de transport pour le premier paquet de données à entête comprimé, et l'exécution d'une compression d'entête pour l'entête de protocole de transport afin de former le deuxième paquet de données comprennent :
la décompression de l'entête IP/UDP/APP. et de l'entête IP/UDP/GTP-U du premier paquet de données à entête comprimé ; la compression de l'entête IP/UDP/APP. en utilisant un profil de compression IP/UDP/APP., et la compression de l'entête IP/UDP/GTP-U en utilisant un profil de compression IP/UDP/GTP-U afin de former le deuxième paquet de données comportant deux segments d'entêtes comprimés, ou la compression de l'entête IP/UDP/APP. et de l'entête IP/UDP/GTP-U afin de former le deuxième paquet de données comportant un segment d'entêtes comprimés ;
ou,
la décompression de l'entête IP/UDP/GTP-U du premier paquet de données à entête comprimé ; et la compression de l'entête IP/UDP/GTP-U en utilisant le profil de compression IP/UDP/GTP-U, afin de former le deuxième paquet de données comportant deux segments d'entêtes comprimés, dans lequel les deux segments d'entête comprimés comprennent : l'entête IP/UDP/APP. et l'entête IP/UDP/GTP-U.

10. Procédé selon l'une quelconque des revendications 1 à 9, dans lequel :
la réception, par le noeud relais, du premier paquet de données à entête comprimé envoyé par l'équipement d'utilisateur comprend :
la réception de multiples premiers paquets de données à entête comprimé envoyés par de multiples équipements d'utilisateurs ;
l'encapsulation de l'entête de protocole de transport pour le premier paquet de données à entête comprimé, et l'exécution d'une compression d'entête pour l'entête de protocole de transport, afin de former le deuxième paquet de données comprennent :
l'encapsulation d'un même entête de protocole de transport pour les entêtes des multiples premiers paquets de données à entête comprimé, et l'exécution d'une compression d'entête pour l'entête de protocole de transport afin de former un deuxième paquet de données.

11. Procédé selon la revendication 10, dans lequel le deuxième paquet de données est encapsulé avec des adresses IP et/ou des numéros de ports, dans lequel les adresses IP et/ou les numéros de ports correspondent respectivement aux multiples équipements d'utilisateurs et sont destinés à distinguer des paquets de données qui sont envoyés par les multiples équipements d'utilisateurs et encapsulés avec le même entête de protocole de transport.

12. Noeud relais, comprenant :
une unité de réception (1001), configurée pour recevoir un premier paquet de données à entête comprimé envoyé par un équipement d'utilisateur ou un autre noeud relais ;
une unité d'encapsulation et de compression (1002), configurée pour encapsuler un entête de protocole de transport pour le premier paquet de données à entête comprimé reçu par l'unité de réception, et exécuter une compression d'entête pour l'entête de protocole de transport afin de former un deuxième paquet de données ; et
une unité d'envoi (1003), configurée pour envoyer le deuxième paquet de données encapsulé par l'unité d'encapsulation et de compression à un eNodeB ou à un noeud relais suivant dans une direction de liaison montante,
**caractérisé en ce que**
l'unité d'encapsulation et de compression est configurée pour :
décomprimer un entête du premier paquet de données afin d'obtenir un entête de Protocole Internet/Protocole de Datagramme Utilisateur/Protocole d'Application, IP/UDP/APP.,
encapsuler l'entête décomprimé du premier paquet de données à entête comprimé avec un entête de Protocole Internet/Protocole de Datagramme Utilisateur/Protocole de Tunnélisation de Service Général de Radiocommunication par Paquets - Plan Utilisateur, IP/UDP/GTP-U ; et
comprimer l'entête IP/UDP/APP. en utilisant un profil de compression IP/UDP/APP. et comprimer l'entête IP/UDP/GTP-U en utilisant un profil de compression IP/UDP/GTP-U afin de former le deuxième paquet de données comportant deux segments d'entêtes comprimés ; ou
comprimer l'entête IP/UDP/APP. et l'entête IP/UDP/GTP-U afin de former le deuxième paquet de données comportant un segment d'entêtes comprimés.

13. Noeud relais, comprenant :
une unité de réception (1001), configurée pour recevoir un premier paquet de données à entête comprimé envoyé par un équipement d'utilisateur ou un autre noeud relais ;
une unité d'encapsulation et de compression (1002), configurée pour encapsuler un entête de protocole de transport pour le premier paquet de données à entête comprimé reçu par l'unité de réception, et exécuter une compression d'entête pour l'entête de protocole de transport afin de former un deuxième paquet de données ; et
une unité d'envoi (1003), configurée pour envoyer le deuxième paquet de données encapsulé par l'unité d'encapsulation et de compression à un eNodeB ou à un noeud relais suivant dans une direction de liaison montante,
**caractérisé en ce que**
l'unité d'encapsulation et de compression est configurée pour :
encapsuler un entête IP/UDP/GTP-U à l'extérieur d'un entête IP/UDP/APP. du premier paquet de données à entête comprimé afin de former le deuxième paquet de données, et exécuter une compression d'entête pour l'entête IP/UDP/GTP-U.
